# EUROPEAN PATENT SPECIFICATION

(11) **EP 4 502 969 B1**
(45) Date of publication and mention of the grant of the patent: **09.12.2026**
(21) Application number: 23864483.5
(22) Date of filing: 20.07.2023
(51) Int. Cl.: G06V 40/16, G06N 3/04, G06N 3/084, G06V 10/46, G06V 10/82, G06V 40/20, G06V 20/64, G06V 40/10, G06T 7/73, G06N 3/045, G06N 3/0464

(54) **HEAD POSTURE ESTIMATION METHOD AND APPARATUS, AND DEVICE AND STORAGE MEDIUM**
VERFAHREN UND VORRICHTUNG ZUR KOPFHALTUNGSSCHÄTZUNG SOWIE VORRICHTUNG UND SPEICHERMEDIUM
PROCÉDÉ ET APPAREIL D'ESTIMATION DE POSTURE DE TÊTE, AINSI QUE DISPOSITIF ET SUPPORT DE STOCKAGE

(30) Priority: 15.09.2022 CN 202211130441
(43) Date of publication of application: 05.02.2025
(73) Proprietor: Tencent Technology (Shenzhen) Company Limited, Shenzhen, Guangdong 518057 (CN)
(72) Inventor: WEI, Huawei, Shenzhen, Guangdong 518057 (CN)
(74) Representative: Novagraaf International SA
(86) International application number: PCT/CN2023/108312
(87) International publication number: WO 2024/055748

(56) References cited:
- CN-A- 105 447 462
- CN-A- 112 241 731
- CN-A- 114 299 152
- CN-A- 114 333 034
- CN-A- 114 360 031
- US-A1- 2021 150 264
- ARNAUD DAPOGNY ET AL: "Deep Entwined Learning Head Pose and Face Alignment Inside an Attentional Cascade with Doubly-Conditional fusion", ARXIV.ORG, CORNELL UNIVERSITY LIBRARY, 201 OLIN LIBRARY CORNELL UNIVERSITY ITHACA, NY 14853, 14 April 2020 (2020-04-14), XP081643728
- ERROLL WOOD ET AL: "3D face reconstruction with dense landmarks", ARXIV.ORG, CORNELL UNIVERSITY LIBRARY, 201 OLIN LIBRARY CORNELL UNIVERSITY ITHACA, NY 14853, 20 July 2022 (2022-07-20), XP091276246
- HUANG QIUBO ET AL: "Joint model for learning state recognition with combining action detection and object detection", 2022 IEEE INTERNATIONAL CONFERENCE ON IMAGING SYSTEMS AND TECHNIQUES (IST) IEEE, 21 June 2022 (2022-06-21), pages 1 - 6, XP034152646, [retrieved on 20220720], DOI: 10.1109/IST55454.2022.9827718
- VINKLE SRIVASTAV ET AL: "Self-supervision on Unlabelled OR Data for Multi-person 2D/3D Human Pose Estimation", ARXIV.ORG CORNELL UNIVERSITY LIBRARY, 201 OLIN LIBRARY CORNELL UNIVERSITY ITHACA, NY 14853, 20 August 2021 (2021-08-20), XP091021529, DOI: 10.1007/978-3-030-59710-8_74

## Description

### RELATED APPLICATION

This application claims priority to Chinese Patent Application No. 2022111304414, entitled "HEAD POSTURE ESTIMATION METHOD AND APPARATUS, AND DEVICE AND STORAGE MEDIUM" filed with the China National Intellectual Property Administration on September 15, 2022.

### TECHNICAL FIELD

This application relates to the field of image processing, and in particular, to head pose estimation technologies.

### BACKGROUND OF THE DISCLOSURE

In the context of computer vision, head pose estimation refers to the ability to infer the orientation of a person's head relative to the camera view. In visual dynamic capture scenarios, head pose estimation is a very important part. An accurate head pose allows a virtual character to perfectly replicate a head motion of a person, making a virtual animation more vivid, dexterous, and realistic.

Currently, a mainstream head pose estimation method generally requires the use of a traditional motion sensor or a three-dimensional (3D) image acquisition device to obtain three-dimensional coordinate information of the head. However, since the current mainstream image acquisition device collects two-dimensional (2D) image information, it is necessary to implement 3D conversion of the 2D coordinate information in the world coordinate system based on coordinate information of key points of the face, to obtain 3D coordinate information of a head pose of a person, and then estimation of the head pose and judgment of the head motion are implemented based on changes in the coordinate information.

The above method is based on the method of solving motion from 3D to 2D point pairs (also called perspective-n-point (PnP)). In this method, 2D key points of the face are first estimated, and then corresponding 3D points are calibrated in a fixed 3D head model based on the 2D key points. Through PnP solution, a transformation pose of the 3D points corresponding to the 2D key points may be obtained. Although the above method is generally accurate and interpretable, when a person makes a large expression, the jitter is very significant, and the estimated head pose is not sufficiently stable and reliable. ARNAUD DAPOGNY ET AL: "Deep Entwined Learning Head Pose and Face Alignment Inside an Attentional Cascade with Doubly-Conditional fusion", ARXIV.ORG, CORNELL UNIVERSITY LIBRARY, 201 OLIN LIBRARY CORNELL UNIVERSITY ITHACA, NY 14853, 14 April 2020; ERROLL WOOD ET AL: "3D face reconstruction with dense landmarks", ARXIV.ORG, CORNELL UNIVERSITY LIBRARY, 201 OLIN LIBRARY CORNELL UNIVERSITY ITHACA, NY 14853, 20 July 2022; and VINKLE SRIVASTAV ET AL: "Self-supervision on Unlabelled OR Data for Multi-person 2D/3D Human Pose Estimation", ARXIV.ORG CORNELL UNIVERSITY LIBRARY, 201 OLIN LIBRARY CORNELL UNIVERSITY ITHACA, NY 14853, 20 August 2021 constitute relevant prior art.

### SUMMARY

Embodiments of this application provide a head pose estimation method and apparatus, a device, and a storage medium, which can ensure the stability and reliability of head pose estimation.

In view of the above, according to a first aspect of this application, a head pose estimation method performed by a computer device is provided, including: obtaining an input image including a target face; performing key point recognition processing on the input image through a first network model, to obtain a two-dimensional key point coordinate set and a three-dimensional key point coordinate set of the target face, the first network model including a first branch network configured to recognize the two-dimensional key point coordinate set and a second branch network configured to recognize the three-dimensional key point coordinate set; and determining, according to the two-dimensional key point coordinate set and the three-dimensional key point coordinate set, a head pose in the target face in the input image.

According to another aspect of this application, a head pose estimation apparatus is provided, including:
an obtaining module, configured to obtain an input image including a target face;
a processing module, configured to perform key point recognition processing on the input image through a first network model, to obtain a two-dimensional key point coordinate set image and a three-dimensional key point coordinate set of the target face, the first network model including a first branch network configured to recognize the two-dimensional key point coordinate set and a second branch network configured to recognize the three-dimensional key point coordinate set; and
an output module, configured to determine, according to the two-dimensional key point coordinate set and the three-dimensional key point coordinate set, a head pose in the target face in the to-be-recognized image.

According to another aspect of this application, a computer device is provided, including: a memory, a processor, and a bus system,
wherein the memory is configured to store a program;
the processor is configured to execute the program in the memory, and to perform the method according to the foregoing aspect based on instructions in program code; and
the bus system is configured to connect the memory and the processor, causing the memory to communicate with the processor.

According to another aspect of this application, a computer-readable storage medium is provided, the computer-readable storage medium stores instructions, and when being run in a computer, the instructions cause the computer to perform the method according to the foregoing aspect.

According to another aspect of this application, a computer program product or a computer program is provided, including computer instructions stored in a computer-readable storage medium. A processor of a computer device reads the computer instructions from the computer-readable storage medium, and the processor executes the computer instructions, so that the computer device performs the method according to the foregoing aspect.

According to the foregoing technical solutions, it can be learned that the embodiments of this application have the following advantages: The two branch networks are used to respectively output the 2D key point coordinates and the 3D key point coordinates of the target face in the input image, and then calculate the head pose of the target face based on the 2D key point coordinates and the 3D key point coordinates. Since the 3D key point coordinate may be obtained in real time, a 3D head model may change with changes in expressions. Correspondingly, the correspondence between the 2D key point coordinate and the 3D key point coordinate is more accurate, so that when a person makes a large expression, it is ensured that head pose solution is stable and reliable.

### BRIEF DESCRIPTION OF THE DRAWINGS

FIG. 1 is a schematic architectural diagram of an application system according to an embodiment of this application;
FIG. 2 is a schematic architectural diagram of a first network model according to an embodiment of this application;
FIG. 3 is another schematic architectural diagram of a first network model according to an embodiment of this application;
FIG. 4 is a schematic flowchart of a head pose estimation method according to an embodiment of this application;
FIG. 5 is a schematic diagram of a target face image in a to-be-recognized image according to an embodiment of this application;
FIG. 6 is a schematic flowchart of processing a to-be-processed image through an image processing model to obtain a to-be-recognized image according to an embodiment of this application;
FIG. 7a is a schematic diagram of an embodiment of head pose estimation according to an embodiment of this application;
FIG. 7b is a schematic diagram of a virtual character generated after performing head pose estimation on a to-be-processed image according to an embodiment of this application;
FIG. 8 is a schematic diagram of an embodiment of a head pose estimation apparatus according to an embodiment of this application;
FIG. 9 is a schematic diagram of another embodiment of a head pose estimation apparatus according to an embodiment of this application;
FIG. 10 is a schematic diagram of another embodiment of a head pose estimation apparatus according to an embodiment of this application; and
FIG. 11 is a schematic diagram of another embodiment of a head pose estimation apparatus according to an embodiment of this application.

### DESCRIPTION OF EMBODIMENTS

Embodiments of this application provide a head pose estimation method and apparatus, a device, and a storage medium, which can ensure the stability and reliability of head pose estimation.

The terms such as "first", "second", "third", and "fourth" (if any) in the specification and claims of this application and in the accompanying drawings are used for distinguishing similar objects and not necessarily used for describing any particular order or sequence. Data used in this way is exchangeable in a proper case, so that the embodiments of this application described herein may be implemented in an order different from the order shown or described herein. In addition, the terms "include", "corresponding to" and any other variants are intended to cover the non-exclusive inclusion. For example, a process, method, system, product, or device that includes a series of operations or units is not necessarily limited to those expressly listed operations or units, but may include other operations or units not expressly listed or inherent to such a process, method, product, or device.

In order to solve the problem in related technologies that the head pose estimation based on the PnP algorithm is not sufficiently stable and reliable, this application provides the following technical solutions:

A to-be-recognized image is obtained, the to-be-recognized image including a target face image; the to-be-recognized image is inputted into a first network model, to obtain a two-dimensional key point coordinate set of the target face image in the to-be-recognized image and a three-dimensional key point coordinate set of the target face image in the to-be-recognized image, the first network model including a first branch network configured to recognize the two-dimensional key point coordinate set and a second branch network configured to recognize the three-dimensional key point coordinate set; and it is determined, according to the two-dimensional key point coordinate set and the three-dimensional key point coordinate set, a head pose in the target face image in the to-be-recognized image. In the embodiments of this application, since the 3D key point coordinates of the face image in the to-be-recognized image may be obtained in real time, it is ensured that a 3D head model may change with changes in expressions of a person. Correspondingly, the correspondence between the 2D key point coordinate and the 3D key point coordinate is more accurate, so that when a person makes a large expression in the to-be-recognized image, it is ensured that head pose solution is stable and reliable.

To facilitate understanding, the following explains some terminologies involved in this application.

Key points of facial features: used to represent positions of the facial features on a face. The positions of the facial features may be represented by key points. The key points of facial features involved in the embodiments of this application include points corresponding to five positions of the left pupil, the right pupil, the nose tip, the left mouth corner, and the right mouth corner of a face.

Eulerian angles: a set of 3 independent angular parameters proposed by Euler to determine the position of a fixed-point rotating rigid body. In the embodiments of this application, a rectangular coordinate system is established based on the face. In the embodiments of this application, a face pose angle is, for example, the Eulerian angle. The Eulerian angle is in a three-dimensional rectangular coordinate system. The three-dimensional rectangular coordinate system uses the center or center of gravity of the person's head as the origin, a direction from one ear of the face to the other ear is the X axis, a direction from the top of the head of the person to the neck is the Y axis, and a direction from the face of the person to the rear head is the Z axis. The Eulerian angle includes the following three angles:
pitch angle (pitch): angle rotating around the X axis;
yaw angle (yaw): angle rotating around the Y axis; and
roll angle (roll): angle rotating around the Z axis.

Visual motion capture: Traditional motion capture uses inertial sensors or marker points attached to the human body for motion capture. Visual motion capture does not require a person to wear any device and may capture facial and body motions of a person using single or multiple cameras.

6 degrees of freedom (6DoF): DoF is the number of directions in which an object may move in a 3D space, and there are a total of 6 degrees of freedom. That is, a head pose includes rotation and translation. The rotation is represented by 3 Eulerian angles, and the translation is also represented by displacements in 3 directions. In total, there are 6 degrees of freedom pose parameters.

Perspective-n-point (PnP): PnP is a method for solving the motion from 3D to 2D point pairs. The purpose is to solve the pose of the camera coordinate system relative to the world coordinate system. PnP describes how to estimate the pose of a camera (that is, solve a rotation matrix and a translation vector from the world coordinate system to the camera coordinate system) based on known coordinates of several 3D points (relative to the world coordinate system) and 2D coordinates of these points.

A convolutional layer (Conv) refers to a layered structure including several convolution units in a convolutional neural network layer, and a convolutional neural network (CNN) is a feedforward neural network. The convolutional neural network includes at least two neural network layers. Each neural network layer includes several neurons, the neurons are arranged hierarchically, there are no interconnections between neurons in the same layer, and the transmission of information between layers only occurs in one direction.

A pooling layer, also known as a sampling layer, refers to a layered structure that may extract features from an input value twice. The pooling layer may ensure the main features of the value of the previous layer, and may also reduce the parameters and calculation amount of the next layer. The pooling layer includes multiple feature surfaces. One feature surface of the convolutional layer corresponds to a feature surface in the pooling layer. The number of feature surfaces is not changed. By reducing the resolution of the feature surfaces, a spatially invariance feature may be obtained.

A fully connected layer (FC) means that each node in the layered structure is connected to all nodes in the previous layer and may be configured to perform comprehensive processing on features extracted by the previous neural network layer and plays the role of a "classifier" in the neural network model.

Back propagation: Forward propagation refers to the feedforward processing process of the model. Back propagation is the opposite of forward propagation and refers to updating the weight parameters of each layer of the model based on results output by the model. For example, the model includes an input layer, a hidden layer, and an output layer. In this case, forward propagation refers to processing in the order of input layer-hidden layer-output layer, and back propagation refers to updating weight parameters of each layer in the order of output layer-hidden layer-input layer.

Embodiments of this application provide a head pose estimation method and apparatus, a device, and a storage medium, which can ensure the stability and reliability of head pose estimation. Exemplary applications of the electronic device provided by the embodiments of this application are described below. The electronic device provided by the embodiments of this application may be implemented as various types of user terminals or as servers.

By running the head pose estimation solution provided by the embodiments of this application, the electronic device can ensure the stability and reliability of the head pose estimation, that is, the stability and reliability of the head pose estimation of the electronic device are improved, and this is suitable for multiple application scenarios of head pose estimation, for example, augmented reality (AR) games, virtual reality (VR) games, assisting gaze estimation, modeling attention, making 3D models suitable for videos, and performing facial alignment.

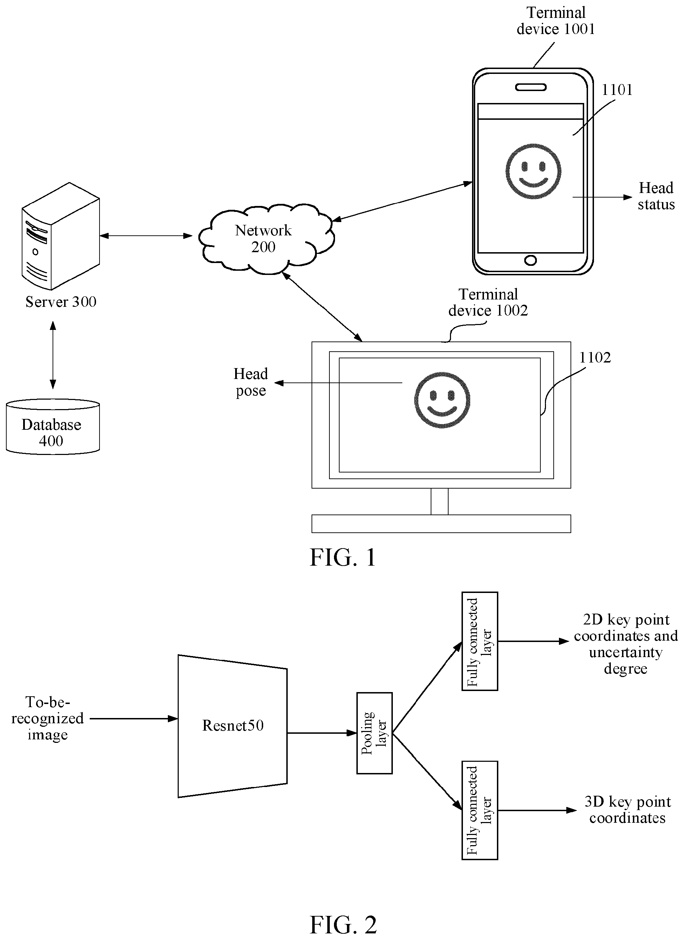

FIG. 1 is an optional schematic architectural diagram of an application scenario of a head pose estimation solution according to an embodiment of this application. To support a head pose estimation application, a terminal device 100 (a terminal device 1001 and a terminal device 1002 are exemplarily shown) is connected to a server 300 through a network 200, the server 300 is connected to a database 400, and the network 200 may be a wide area network or a local area network, or a combination thereof.

A client used to implement the head pose estimation solution is deployed on the terminal device 100. The client may run on the terminal device 100 in the form of a browser and may also run on the terminal device 100 in the form of an independent application (APP). The specific presentation form of the client is not limited herein.

The server 300 involved in this application may be an independent physical server, a server cluster including multiple physical servers, or a distributed system, or a cloud server that may provide basic cloud computing services such as cloud services, cloud databases, cloud computing, cloud functions, cloud storage, network services, cloud communications, middleware services, domain name services, security services, and content delivery networks (CDN), big data, and artificial intelligence platforms. The terminal device 100 may be a smartphone, a tablet computer, a laptop computer, a handheld computer, a personal computer, a smart TV, a smartwatch, an in-vehicle device, a wearable device, or the like, but is not limited to this. The terminal device 100 and the server 300 may be connected by the network 200 directly or indirectly through wired or wireless communication, which is not limited in this application. There is no limitation on the number of servers 300 and terminal devices 100. The solution provided by this application may be completed independently by the terminal device 100, or independently by the server 300, or by the terminal device 100 and the server 300 in cooperation. This application does not specifically limit this.

The database 400 may be regarded as an electronic file cabinet, that is, a place in which electronic files are stored. Users may add, query, update, or delete data in the files or perform other operations. A database is a data set that is stored in a specific manner, may be shared with multiple users, has as little redundancy as possible, and is independent of applications. A database management system (DBMS) is a computer software system designed for managing databases and generally has basic functions such as storage, interception, security guarantee, and backup. Database management systems may be classified according to database models supported by the systems, such as relational and extensible markup language (XML); or classified according to types of computers supported by the systems, such as server clusters and mobile phones; or classified according to query languages used, such as structured query language (SQL) and XQuery; or classified according to the focus of performance impulse, such as maximum scale and maximum operating speed; or classified in other methods. Regardless of which classification method is used, some DBMS are capable of spanning categories, for example, support multiple query languages simultaneously. In this application, the database 400 may be configured to store a training sample set and a to-be-recognized image. Certainly, the storage location of the training sample set is not limited to the database. For example, the set may also be stored in the terminal device 100, a blockchain, or a distributed file system of the server 300.

In some embodiments, the server 300 may execute the head pose estimation method provided in the embodiments of this application and the training method of the first network model in head pose estimation. In this embodiment, the first network model includes a first branch network and a second branch network, where the first branch network is configured to recognize two-dimensional key point coordinates and the uncertainty degree, and the second branch network is configured to recognize three-dimensional key point coordinates. When executing the training method of the first network model, the specific process may be as follows: a first training sample set correspondingly annotated with real 2D key point coordinates and real 3D key point coordinates is obtained from the terminal device 100 and/or the database 400, and the first training sample set is detected and processed through a first initial network model to be trained, to obtain predicted 2D key point coordinates and predicted 3D key point coordinates of each face in the first training sample set. In an embodiment, an uncertainty degree corresponding to the predicted 2D key point coordinates may be further obtained. According to a loss function including pre-design loss factors (such as two factors: interval value and distance), a first loss value corresponding to the predicted 2D key point coordinates and the uncertainty degree corresponding to the predicted 2D key point coordinates is determined, and a second loss value corresponding to the predicted 3D key point coordinates is determined, and then back propagation is performed to adjust the parameters of the first branch network according to the first loss value. At the same time, back propagation is performed to adjust parameters of the second branch network according to the second loss value, thereby achieving training of the first initial network model and obtaining the first network model. In this embodiment, the first branch network and the second branch network are trained independently and do not affect parameter adjustment of each other. This can improve the generalization capabilities of the first branch network and the second branch network. In this embodiment, when training the first network model, the server may calculate the first loss value using Gaussian negative log-likelihood loss (GNLL). In an exemplary solution, the specific calculation process may adopt the formula 1: $loss = - \frac{1}{N} \sum log \left({δ}^{2}\right) + \frac{\left‖f\left(x\right)-y\right‖}{{δ}^{2}}$

*N* is used to indicate the number of 2D key points, *y* is used to indicate the real 2D key point coordinates, *f*(*x*) is used to indicate the predicted 2D key point coordinates output by the first branch network, and *δ* is used to indicate the uncertainty degree of the predicted 2D key point coordinates.

The server may calculate the second loss value using the regression loss function. In an exemplary solution, the server uses L2 LOSS, and the specific calculation process may adopt the formula 2: $loss = - \frac{1}{N} \sum \left‖f\left(x\right)-y\right‖$

*N* is used to indicate the number of 3D key points, *y* is used to indicate the real 3D key point coordinates, and *f*(*x*) is used to indicate the predicted 3D key point coordinates output by the second branch network.

When the server 300 trains the first network model, the initial model architecture of the first network model may include a feature extraction network, a fully connected layer, a pooling layer, the first branch network, and the second branch network. The feature extraction network may be a residual neural network (ResNet) or a CNN network such as Le Net or AlexNet, or a high-resolution netV2P (HRNetV2P), or a hierarchical visual self attention model based on moving windows (Swin Transformer), and the first branch network and the second branch network may be fully connected layers. In an exemplary solution, the following takes the feature extraction network as ResNet50 as an example to illustrate the first network model. As shown in FIG. 2, the first network model includes the ResNet50, where the ResNet50 includes 49 convolutional layers and one fully connected layer, and the fully connected layer is then connected to the pooling layer. The output of the pooling layer is connected to two fully connected layers, one fully connected layer is the first branch network, and the other fully connected layer is the second branch network. The input of the network is 224×224×3. After the convolution calculation of the above structure, the output is 7×7×2048. The pooling layer converts the output into an Eigenvector, and finally the classifier calculates this Eigenvector and outputs a class probability. The ResNet50 network structure may be divided into seven parts. The first part does not include a residual block and mainly performs convolution, regularization, activation function, and maximum pooling calculations on the input. The second, third, fourth, and fifth parts of the structure all include residual blocks. The existence does not change the size of the residual block, but is only used to change the structure of the dimension of the residual block. In the Resnet50 network structure, each residual block has three convolutional layers, and the network has a total of 1+3×(3+4+6+3)=49 convolutional layers. By adding the final fully connected layer, the total is 50 layers, hence the name Resnet50. The input of the Resnet50 network is 256×256×3. After the convolution calculation of the first five parts, the output is a feature map of N×2048×8×8, where N is the number of samples selected for a training (also called batchsize). Then, the feature map of N×2048×8×8 passes through the pooling layer to obtain the feature of N×2048. The feature of N×2048 passes through two FC layers, and 2D key point coordinates, the uncertainty degree, and 3D key point coordinates are outputted respectively. The weight dimension of each FC layer is 2048×3660 (1220 points), where 3660 is considered as 1220×3. For the 2D branch, 3 represents the x and y coordinates and the uncertainty degree δ. For the 3D branch, 3 represents the x, y, and z coordinate values.

In some other embodiments, the server 300 may execute the head pose estimation method provided in the embodiments of this application and the training method of the first network model in head pose estimation. In this embodiment, the first network model includes a first branch network, a second branch network, and a computing network, where the first branch network is configured to recognize two-dimensional key point coordinates, and the second branch network is configured to recognize three-dimensional key point coordinates. The computing network is configured to estimate the head pose based on the 2D key point coordinates and the 3D key point coordinates. When executing the training method of the first network model, the specific process may be as follows: a second training sample set correspondingly annotated with real 2D key point coordinates, real 3D key point coordinates, and a real head pose is obtained from the terminal device 100 and/or the database 400, and the second training sample is detected and processed through a second initial network model to be trained, to obtain predicted 2D key point coordinates and predicted 3D key point coordinates of each face in the second training sample set. In an embodiment, an uncertainty degree corresponding to the predicted 2D key point coordinates may be further obtained. According to a loss function including pre-design loss factors (such as two factors: interval value and distance), a first loss value corresponding to the predicted 2D key point coordinates and the uncertainty degree corresponding to the predicted 2D key point coordinates is determined, and a second loss value corresponding to the predicted 3D key point coordinates is determined. Then, a predicted head pose is calculated according to the predicted 2D key point coordinates and the predicted 3D key point coordinates, and the third loss value is calculated according to the predicted head pose and the real head pose. Then, according to the first loss value, the second loss value, and the third loss value, back propagation is performed to adjust the parameters of the first branch network and the second branch network, thereby achieving training of the second initial network model and obtaining the first network model. In this embodiment, the first branch network and the second branch network may be jointly trained, so that the two branches may affect each other and enhance the network learning capability. In this embodiment, when training the first network model, the server may calculate the first loss value using Gaussian negative log-likelihood loss (GNLL). In an exemplary solution, the specific calculation process may adopt the formula 1: $loss = - \frac{1}{N} \sum log \left({δ}^{2}\right) + \frac{\left‖f\left(x\right)-y\right‖}{{δ}^{2}}$
*N* is used to indicate the number of 2D key points, *y* is used to indicate the real 2D key point coordinates, *f*(*x*) is used to indicate the predicted 2D key point coordinates output by the first branch network, and *δ* is used to indicate the uncertainty degree of the predicted 2D key point coordinates.

The server may calculate the second loss value using the regression loss function. In an exemplary solution, the server uses L2 LOSS, and the specific calculation process may adopt the formula 2: $loss = - \frac{1}{N} \sum \left‖f\left(x\right)-y\right‖$
*N* is used to indicate the number of 3D key points, *y* is used to indicate the real 3D key point coordinates, and *f*(*x*) is used to indicate the predicted 3D key point coordinates output by the second branch network.

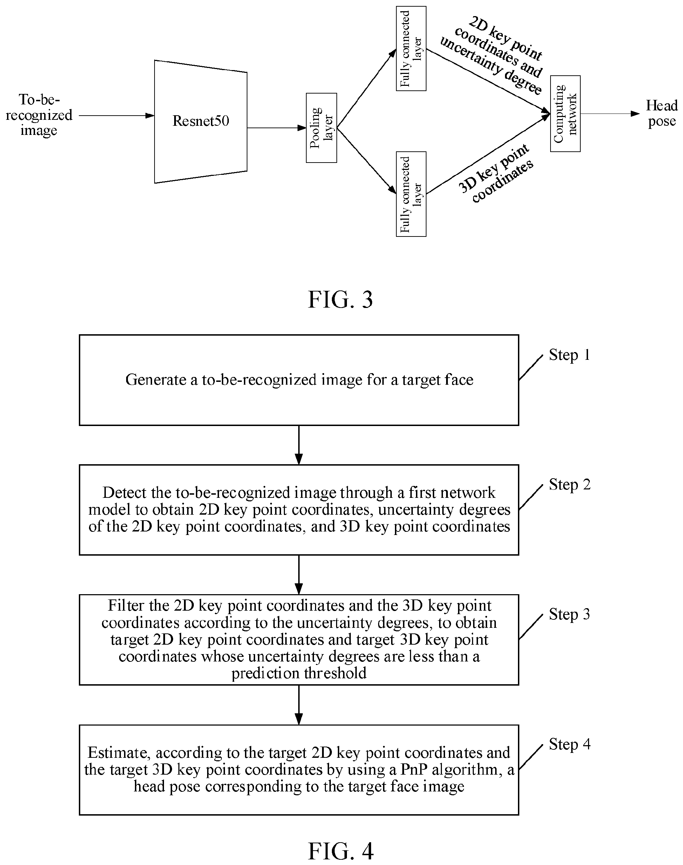

When the server 300 trains the first network model, the initial model architecture of the first network model may include a feature extraction network, a fully connected layer, a pooling layer, the first branch network, the second branch network, and the computing network. The feature extraction network may be a residual neural network (ResNet) or a CNN network such as Le Net or AlexNet, or a high-resolution netV2P (HRNetV2P), or a hierarchical visual self attention model based on moving windows (Swin Transformer), and the first branch network and the second branch network may be fully connected layers. In an exemplary solution, the following takes the feature extraction network as ResNet50 as an example to illustrate the first network model. As shown in FIG. 3, the first network model includes the ResNet50, where the ResNet50 includes 49 convolutional layers and one fully connected layer, and the fully connected layer is then connected to the pooling layer. The output of the pooling layer is connected to two fully connected layers, one fully connected layer is the first branch network, and the other fully connected layer is the second branch network. The input of the network is 224×224×3. After the convolution calculation of the above structure, the output is 7×7×2048. The pooling layer converts the output into an Eigenvector, and finally the classifier calculates this Eigenvector and outputs a class probability. The ResNet50 network structure may be divided into five parts. The first part does not include a residual block and mainly performs convolution, regularization, activation function, and maximum pooling calculations on the input. The second, third, fourth, and fifth parts of the structure all include residual blocks. The existence does not change the size of the residual block, but is only used to change the structure of the dimension of the residual block. In the Resnet50 network structure, each residual block has three convolutional layers, and the network has a total of 1+3×(3+4+6+3)=49 convolutional layers. By adding the final fully connected layer, the total is 50 layers, hence the name Resnet50. The input of the Resnet50 network is 256×256×3. After the convolution calculation of the first five parts, the output is a feature map of N×2048×8×8, where N is the number of samples selected for a training (also called batchsize). Then, the feature map of N×2048×8×8 passes through the pooling layer to obtain the feature of N×2048. The feature of N×2048 passes through two FC layers, and 2D key point coordinates, the uncertainty degree, and 3D key point coordinates are outputted respectively. The weight dimension of each FC layer is 2048×3660 (1220 points), where 3660 is considered as 1220×3. For the 2D branch, 3 represents the x and y coordinates and the uncertainty degree δ. For the 3D branch, 3 represents the x, y, and z coordinate values. Then, the predicted head pose is calculated according to the predicted 2D key point coordinates and the uncertainty degree outputted by the first branch network and the predicted 3D key point coordinates outputted by the second branch network.

In this embodiment, the following technical solution may be used for the data of the first training sample set and the second training sample set: That is, the face image is collected through a depth camera of the terminal device, and then face 3D point cloud data and a corresponding head pose are captured in real time by using an augmented reality technology (ARKit) based on a device system, data collection software is developed based on ARKit, and then facial data is collected at a speed of 60 frames (FPS). In this way, facial data collection based on an existing technology may reduce the difficulty of collecting training sample sets.

Other external cameras may also be used when obtaining the first training sample set and the second training sample set. The external camera may be a depth camera or other cameras, as long as facial data collection may be achieved, and the specific method is not limited herein. In this way, using external devices for facial data collection may reduce the requirements for hardware devices, thereby reducing costs.

After training the first network model, the server 300 may save the first network model locally, thereby providing a remote head pose estimation function for the terminal device 100. For example, the server 300 may receive the to-be-recognized image sent by the terminal device 100, and detect and process the to-be-recognized image through the first network model, to obtain a head pose in the target face image in the to-be-recognized image and a corresponding confidence probability. Finally, the head pose is sent to the terminal device 100, so that the terminal device 100 displays the head pose in a graphical interface 110 (for example, a graphical interface 1101 and a graphical interface 1102).

The server 300 may also send (deploy) the trained first network model to the terminal device 100, thereby implementing head pose estimation locally on the terminal device 100. For example, the terminal device 100 may obtain the to-be-recognized image in real time or obtain the to-be-recognized image from other devices, and detect and process the to-be-recognized image through the first network model, to obtain a head pose in the target face image in the to-be-recognized image and a corresponding confidence probability. Finally, the terminal device 100 displays the head pose in a graphical interface 110 (for example, a graphical interface 1101 and a graphical interface 1102).

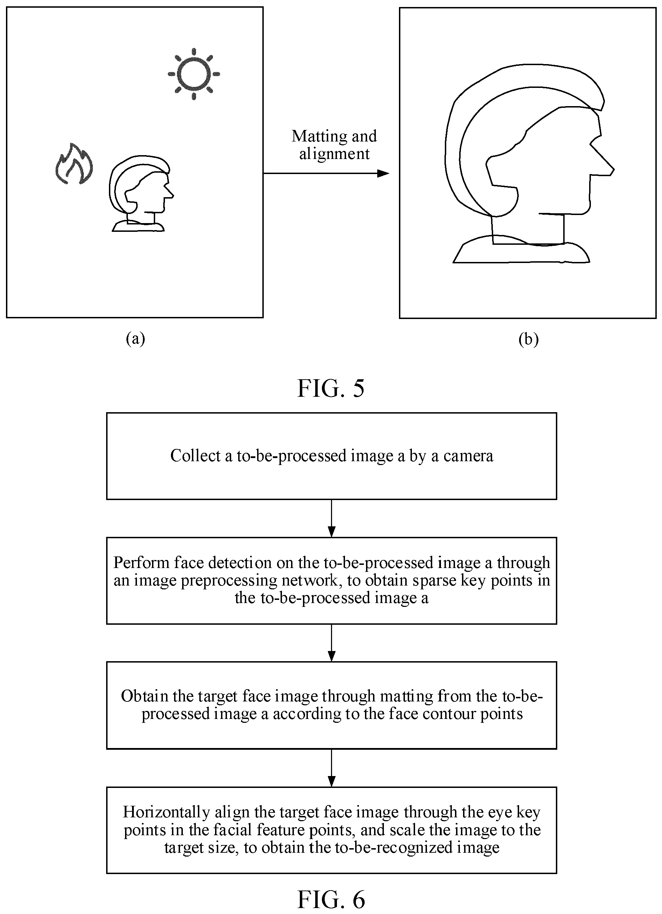

Based on the above system, referring to FIG. 4 for details, an execution process of the head pose estimation method in this application may be as follows:
Operation 1: Generate a to-be-recognized image for a target face. In this embodiment, the to-be-recognized image includes a target face image, where the target face image refers to an area in the to-be-recognized image that only includes a face image and does not include other background images. As shown in FIG. 5, (a) in FIG. 5 is an image including a background image, while (b) in FIG. 5 is the to-be-recognized image including the target face image. In this embodiment, various cameras may first collect a to-be-processed image including other background images, and then preprocess the to-be-processed image to obtain the to-be-recognized image. A specific process may be shown in FIG. 6: A to-be-processed image a is collected by a camera. Then, sparse key points in the to-be-processed image a are obtained through face detection, where the sparse key points may be facial feature points and face contour points. Then, the target face image is obtained through matting from the to-be-processed image according to the face contour points. Then, the target face image is horizontally aligned through the eye key points in the facial feature points, and the image is scaled to the target size, thereby obtaining the to-be-recognized image.
Operation 2: Detect the to-be-recognized image through a first network model to obtain 2D key point coordinates, uncertainty degrees of the 2D key point coordinates, and 3D key point coordinates.
Operation 3: Filter the 2D key point coordinates and the 3D key point coordinates according to the uncertainty degrees, to obtain target 2D key point coordinates and target 3D key point coordinates whose uncertainty degrees are less than a prediction threshold.
Operation 4: Estimate, according to the target 2D key point coordinates and the target 3D key point coordinates by using a PnP algorithm, a head pose in the target face image.

In a specific implementation of this application, related data such as the to-be-detected image and the training sample set is involved, when the embodiments of this application are applied to a specific product or technology, it is necessary to obtain the user's permission or consent, and the collection, usage, and processing of related data need to comply with relevant laws, regulations and standards of relevant countries and regions.

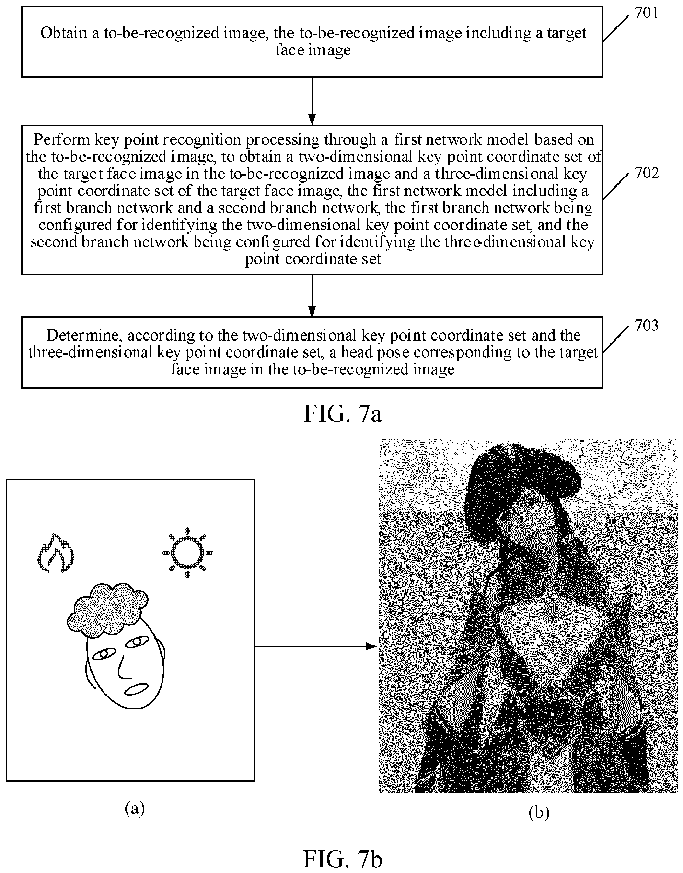

Based on the above introduction, the following takes the terminal device as the execution subject as an example to introduce the head pose estimation method in this application. Referring to FIG. 7a, an embodiment of the head pose estimation method in the embodiment of this application includes:
701: Obtain a to-be-recognized image, the to-be-recognized image including a target face image.

The terminal device may collect the to-be-processed image through its own camera, and then input the to-be-processed image into the image processing model for processing, to obtain the to-be-recognized image. Alternatively, the terminal device may also obtain the to-be-recognized image stored in the memory. Alternatively, the terminal device may also obtain the to-be-recognized image through an instant messaging application, and the instant messaging application refers to software that enables online chatting and communication through an instant messaging technology. Alternatively, the terminal device may also obtain the to-be-recognized image from the Internet, for example, obtain video images from a video network on the Internet and extract a face image from the video images, or for another example, directly download the face image from the Internet, or the like.

In an exemplary solution, the specific process may be as follows: obtaining a to-be-processed image, where the to-be-processed image includes a target face image captured by a camera; then determining sparse key points of the target face image in the to-be-processed image through an image preprocessing network, where the sparse key points include facial feature points and face contour points of the target face image; obtaining the target face image from the to-be-processed image according to the face contour points; and horizontally aligning the target face image and scaling the target face image to a target size according to the facial feature points to obtain the to-be-recognized image.

The target face image refers to an area in the to-be-recognized image that only includes a face image and does not include other background images. As shown in FIG. 5, (a) in FIG. 5 is an image including a background image, while (b) in FIG. 5 is the to-be-recognized image including the target face image. In this embodiment, various cameras may first collect a to-be-processed image including background images, and then preprocess the to-be-processed image to obtain the to-be-recognized image.

A specific process may be shown in FIG. 6: A to-be-processed image a is collected by a camera. Then, face detection is performed on the to-be-processed image a through an image preprocessing network, to obtain sparse key points in the to-be-processed image a, where the sparse key points may be facial feature points and face contour points. Then, the target face image is obtained through matting from the to-be-processed image a according to the face contour points. Then, the target face image is horizontally aligned through the eye key points in the facial feature points, and the horizontally aligned target face image is scaled to the preset target size, thereby obtaining the to-be-recognized image.

702: Perform key point recognition processing on the to-be-recognized image through a first network model, to obtain a two-dimensional key point coordinate set of the target face image in the to-be-recognized image and a three-dimensional key point coordinate set of the target face image in the to-be-recognized image, the first network model including a first branch network configured to recognize the two-dimensional key point coordinate set and a second branch network configured to recognize the three-dimensional key point coordinate set.

In addition, key point processing is performed on the to-be-recognized image through the first network model, and the uncertainty degree corresponding to each two-dimensional key point in the two-dimensional key point coordinate set may also be obtained. The uncertainty degree is recognized by the first branch network in the first network model.

The terminal device inputs the to-be-recognized image into the first network model, and then the feature extraction network of the first network model performs corresponding feature extraction on the to-be-recognized image, to obtain the final feature representation of the to-be-recognized image. The final feature representation is then inputted into the first branch network and the second branch network of the first network model respectively. The first branch network outputs the two-dimensional key point coordinate (that is, 2D key point coordinates) set of the target face image in the to-be-recognized image and the uncertainty degree. The second branch network outputs the three-dimensional key point coordinate (that is, 3D key point coordinates) set of the target face image in the to-be-recognized image.

The training process of the first network model in this application may be shown in FIG. 2 to FIG. 3, and the details will not be repeated herein.

703: Determine, according to the two-dimensional key point coordinate set and the three-dimensional key point coordinate set, a head pose in the target face image in the to-be-recognized image.

When the first network model also outputs the uncertainty degree corresponding to each two-dimensional key point coordinate in the two-dimensional key point coordinate set, the terminal device may determine, according to the two-dimensional key point coordinate set, the uncertainty degree corresponding to each two-dimensional key point coordinate in the two-dimensional key point coordinate set, and the three-dimensional key point coordinate set, the head pose in the target face image in the to-be-recognized image.

In this embodiment, the terminal device may filter the two-dimensional key point coordinates in the two-dimensional key point coordinate set and the three-dimensional key point coordinates in the three-dimensional key point coordinate set according to the uncertainty degrees, to obtain intermediate three-dimensional key point coordinates and intermediate two-dimensional key point coordinates, and then solve, according to the intermediate three-dimensional key point coordinates and the intermediate two-dimensional key point coordinates by using the PnP algorithm, the head pose in the target face image. In an exemplary solution, the terminal device sorts the corresponding uncertainty degrees of two-dimensional key point coordinates, eliminates 20% two-dimensional key point coordinates with the largest uncertainty degrees, uses the retained intermediate two-dimensional key point coordinates to determine the corresponding intermediate three-dimensional key point coordinates for retaining, and then solves the head pose through PnP solution according to the retained intermediate two-dimensional key point coordinates and intermediate three-dimensional key point coordinates. In an exemplary solution, the terminal device may use a built-in solve PnP algorithm of opencv. The principle of this method is to iteratively solve the pose, so that the intermediate 3D key point coordinates are as close as possible to the intermediate 2D key point coordinates after being projected by this pose.

In this way, the two-dimensional key point coordinate with a high uncertainty degree is eliminated, and head pose estimation is performed only based on the two-dimensional key point coordinate with a low uncertainty degree and a corresponding three-dimensional key point coordinate. This can effectively avoid that a key point with a high uncertainty degree affects the final pose estimation result, that is, avoid the negative effects caused by the key point with a high uncertainty degree, thereby making head pose solution more reliable and robust.

The technical solutions provided by the embodiments of this application may be applied for virtual character construction, assisting gaze estimation, modeling attention, making 3D models suitable for videos, and performing facial alignment. In an exemplary application scenario, game character construction is taken as an example. A game device collects facial data of a user through a camera, performs head pose estimation to generate an image of a virtual object corresponding to the user, and then interacts with other virtual objects in the game through the virtual object to achieve game interaction.

A process in which the game device collects facial data through the camera and generates a virtual object based on the facial data may be shown in FIG. 7b. As shown in FIG. 7b, a head motion of the game character is generated by collecting a facial motion. Specifically, the collected to-be-processed image may be shown in (a) in FIG. 7b, that is, the head motion displayed in the target face image is head tilt. Then, the head pose estimation provided by the embodiments of the application is shown in (b) in FIG. 7b, that is, the head motion of the corresponding game character is displayed synchronously as head tilt. In FIG. 7b, the corresponding head motion of the virtual object is generated by collecting the facial motion of the user, to improve the game interaction experience. At the same time, the head motion of the virtual object is synchronized in real time, which improves the data processing efficiency.

In practical applications, the head pose estimation method may also be applied to live broadcasting or video recording. That is, when a user does not want to appear in the live video with his or her own appearance, facial data of the user may be collected through the camera, then the corresponding virtual character is generated based on the facial data, and then the virtual image is used for live broadcasting or video recording. In this way, the action of the virtual character may be synchronized with the action of the user, effectively implementing the interaction between the user and users watching the video and protecting user privacy.

The following is a specific example for illustrating the beneficial effects of the technical solution provided in this application:

A data set of 40 persons and about 500,000 images is obtained to evaluate the technical indicators of the method provided in the embodiments of this application and other methods. There are three evaluation methods: 1. 6D0F parameters are directly estimated. 2. A PnP method is used, but without estimating uncertainty. 3. Technical solutions provided by this application. Results are shown in Table 1:

**Table 1**

| Method | pitch | yaw | roll | tx | ty | tz |
|---|---|---|---|---|---|---|
| 6D0F parameters are directly estimated | 2.85 | 1.78 | 1.12 | 2.75 | 5.42 | 18.52 |
| PnP without uncertainty | 2.12 | 1.23 | 0.85 | 2.03 | 3.48 | 13.45 |
| Technical solutions provided by this application | 1.54 | 1.02 | 0.45 | 1.01 | 2.15 | 9.24 |

As shown in table 1, comparisons are made in all 6 dimensions of 6DoF, which are pitch, yaw, roll, tx, ty, and tz. Based on the results, the technical solution provided by this application is significantly better than other methods in indicators of all dimensions.

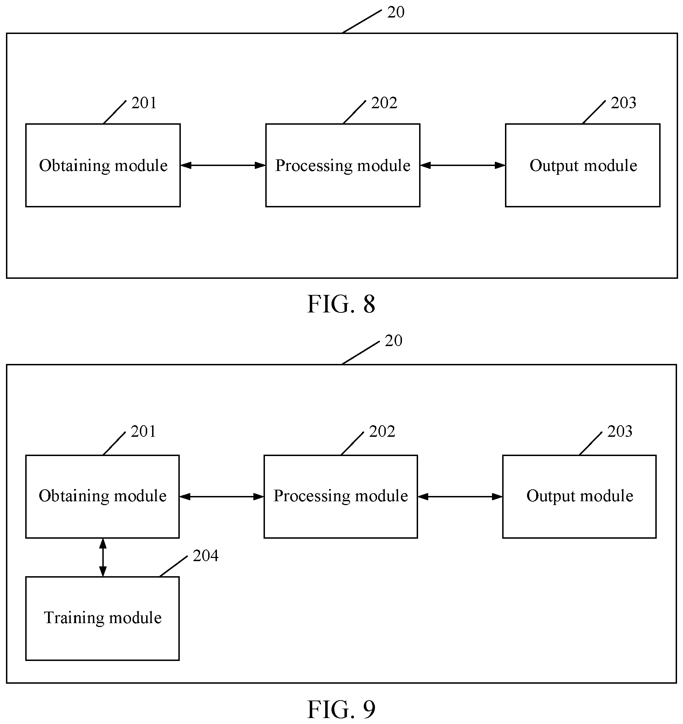

The following is a detailed description of the head pose estimation apparatus in this application. FIG. 8 is a schematic diagram of an embodiment of the head pose estimation apparatus according to an embodiment of this application. A head pose estimation apparatus 20 includes:
an obtaining module 201, configured to obtain a to-be-recognized image, the to-be-recognized image including a target face image;
a processing module 202, configured to perform key point recognition processing on the to-be-recognized image through a first network model, to obtain a two-dimensional key point coordinate set of the target face image in the to-be-recognized image and a three-dimensional key point coordinate set of the target face image in the to-be-recognized image, the first network model including a first branch network configured to recognize the two-dimensional key point coordinate set and a second branch network configured to recognize the three-dimensional key point coordinate set; and
an output module 203, configured to determine, according to the two-dimensional key point coordinate set and the three-dimensional key point coordinate set, a head pose in the target face image in the to-be-recognized image.

An embodiment of this application provides a head pose estimation apparatus. In the apparatus, the two branch networks are used to respectively output the 2D key point coordinates and the 3D key point coordinates of the target face image in the to-be-recognized image, and then calculate the head pose of the target face image based on the 2D key point coordinates and the 3D key point coordinates. Since the 3D key point coordinate may be obtained in real time, a 3D head model may change with changes in expressions. Correspondingly, the correspondence between the 2D key point coordinate and the 3D key point coordinate is more accurate, so that when a person makes a large expression, it is ensured that head pose estimation is stable and reliable.

In an embodiment, based on the embodiment corresponding to FIG. 8, in another embodiment of the head pose estimation apparatus 20 provided by this embodiment of this application:
The processing module 202 is specifically configured to perform key point recognition processing on the to-be-recognized image through the first network model, to obtain the two-dimensional key point coordinate set, an uncertainty degree corresponding to each two-dimensional key point coordinate in the two-dimensional key point coordinate set, and the three-dimensional key point coordinate set; where the first branch network in the first network model is further configured to recognize the uncertainty degree corresponding to each two-dimensional key point coordinate in the two-dimensional key point coordinate set; and
the output module 203 is specifically configured to determine, according to the two-dimensional key point coordinate set, the uncertainty degree, and the three-dimensional key point coordinate set, the head pose in the target face image in the to-be-recognized image.

In an embodiment, based on the embodiment corresponding to FIG. 8, in another embodiment of the head pose estimation apparatus 20 provided by this embodiment of this application:

The output module 203 is specifically configured to eliminate, from the two-dimensional key point coordinate set, a two-dimensional key point coordinate whose corresponding uncertainty degree is greater than a preset threshold, to obtain an intermediate two-dimensional key point coordinate set;
obtain an intermediate three-dimensional key point coordinate set from the three-dimensional key point coordinate set according to the intermediate two-dimensional key point coordinate set; and
determine, according to the intermediate two-dimensional key point coordinate set and the intermediate three-dimensional key point coordinate set, the head pose in the target face image in the to-be-recognized image.

An embodiment of this application provides a head pose estimation apparatus. The apparatus filters the 2D key point coordinates and the 3D key point coordinates according to uncertainty degrees corresponding to the 2D key point coordinates, so that points with large uncertainties are deleted when estimating the head pose, making the head pose estimation more robust.

In an embodiment, based on the embodiment corresponding to FIG. 8, in another embodiment of the head pose estimation apparatus 20 provided by this embodiment of this application, the output module 203 is specifically configured to determine, through PnP solution according to the intermediate two-dimensional key point coordinate set and the intermediate three-dimensional key point coordinate set, the head pose in the target face image in the to-be-recognized image.

An embodiment of this application provides a head pose estimation apparatus. The apparatus performs pose estimation through PnP solution, making head pose estimation more feasible.

In an embodiment, based on the embodiment corresponding to FIG. 8, in another embodiment of the head pose estimation apparatus 20 provided by this embodiment of this application, as shown in FIG. 9:

The obtaining module 201 is further configured to obtain a first training sample set, where the first training sample set includes training samples that are annotated with a real two-dimensional key point coordinate set and a real three-dimensional key point coordinate set of a face image.

The head pose estimation apparatus further includes a training module 204, configured to perform, through a feature extraction network layer in a first initial network model to be trained, feature extraction processing on a face image corresponding to a training sample in the first training sample set, to obtain a feature representation of the training sample;
determine, through an initial first branch network in the first initial network model according to the feature representation of the training sample, a predicted two-dimensional key point coordinate set corresponding to the training sample; and determine, through an initial second branch network in the first initial network model according to the feature representation of the training sample, a predicted three-dimensional key point coordinate set corresponding to the training sample;
calculate a first loss value according to the predicted two-dimensional key point coordinate set and the real two-dimensional key point coordinate set in the training samples, and calculate a second loss value according to the predicted three-dimensional key point coordinate set and the real three-dimensional key point coordinate set in the training samples;
adjust the initial first branch network according to the first loss value to obtain the first branch network, and adjust the initial second branch network according to the second loss value to obtain the second branch network; and
obtain the first network model according to the first branch network and the second branch network.

An embodiment of this application provides a head pose estimation apparatus. The apparatus obtains the first branch network and the second branch network through training in the training process, respectively outputs the 2D key point coordinates and the 3D key point coordinates of the target face image in the to-be-recognized image through the two branch networks, and then calculates the head pose of the target face image based on the 2D key point coordinates and the 3D key point coordinates. Since the 3D key point coordinate may be obtained in real time, a 3D head model may change with changes in expressions. Correspondingly, the correspondence between the 2D key point coordinate and the 3D key point coordinate is more accurate, so that when a person makes a large expression, it is ensured that head pose estimation is stable and reliable. At the same time, the first branch network and the second branch network are trained independently, which can increase the generalization performance of the model.

In an embodiment, based on the embodiment corresponding to FIG. 9, in another embodiment of the head pose estimation apparatus 20 provided by this embodiment of this application, the training module 204 is specifically configured to:
determine, through the initial first branch network according to the feature representation of the training sample, a predicted two-dimensional key point coordinate set corresponding to the training samples and a predicted uncertainty degree corresponding to each predicted key point coordinate in the predicted two-dimensional key point coordinate set; and
calculate the first loss value according to the predicted two-dimensional key point coordinate set, the predicted uncertainty degree, and the real two-dimensional key point coordinate set.

In an embodiment, based on the embodiment corresponding to FIG. 9, in another embodiment of the head pose estimation apparatus 20 provided by this embodiment of this application, the obtaining module 201 is specifically configured to collect a training image set through a depth camera, where each training image in the training image set includes three-dimensional point cloud data and a real head pose of a face image;
perform pose projection on the three-dimensional point cloud data to obtain two-dimensional key point data of the face image in the training image; and
determine the first training sample set through an image processing network according to the training image set.

An embodiment of this application provides a head pose estimation apparatus. The apparatus collects training images through a depth camera, so that it is more convenient to obtain the 3D point cloud data and the real head pose, thereby simplifying the process of obtaining the training sample set.

In an embodiment, based on the embodiment corresponding to FIG. 9, in another embodiment of the head pose estimation apparatus 20 provided by this embodiment of this application, the obtaining module 201 is specifically configured to determine sparse key points of the face image in the training image through the image processing network according to the training image in the training image set, where the sparse key points include facial feature points and face contour points of the face image in the training image;
obtain the face image from the training image according to the face contour points; and
horizontally align the face image and scale the face image to a target size according to the facial feature points, to obtain training samples in the first training sample set.

An embodiment of this application provides a head pose estimation apparatus. The apparatus performs matting and alignment on the face image through sparse key points, which can reduce the interference caused by background information in the image collected by the camera. Besides, the image is scaled to a uniform size, to facilitate image feature extraction and reduce training difficulty.

In an embodiment, based on the embodiment corresponding to FIG. 9, in another embodiment of the head pose estimation apparatus 20 provided by this embodiment of this application, the sparse key points include at least five facial feature points and four face contour points.

An embodiment of this application provides a head pose estimation apparatus. The apparatus can reduce the image preprocessing process while ensuring accurate matting and alignment.

In an embodiment, based on the embodiment corresponding to FIG. 9, in another embodiment of the head pose estimation apparatus 20 provided by this embodiment of this application, the feature extraction network includes a residual neural network ResNet and a pooling layer, the first branch network is a fully connected layer, and the second branch network is a fully connected layer.

An embodiment of this application provides a head pose estimation apparatus. The apparatus can increase the feasibility of the solution.

In an embodiment, based on the embodiment corresponding to FIG. 9, in another embodiment of the head pose estimation apparatus 20 provided by this embodiment of this application, the training module 204 is specifically configured to calculate the first loss value according to the predicted two-dimensional key point coordinate set, the predicted uncertainty degree, and the real two-dimensional key point coordinate set by using Gaussian negative log likelihood loss; and calculate the second loss value according to the predicted three-dimensional key point coordinate set and the real three-dimensional key point coordinate set by using a regression loss function.

An embodiment of this application provides a head pose estimation apparatus. The apparatus can increase the feasibility of the solution.

In an embodiment, based on the embodiment corresponding to FIG. 8, in another embodiment of the head pose estimation apparatus 20 provided by this embodiment of this application, as shown in FIG. 9:

The obtaining module 201 is specifically configured to obtain a second training sample set, where the second training sample set includes training samples that are annotated with a real two-dimensional key point coordinate set, a real three-dimensional key point coordinate set, and a real head pose of a face image.

The head pose estimation apparatus further includes a training module 204, configured to perform, through a feature extraction network layer in a second initial network model to be trained, feature extraction processing on a face image corresponding to a training sample in the second training sample set, to obtain a feature representation of the training sample;
determine, through an initial first branch network in the second initial network model according to the feature representation of the training sample, a predicted two-dimensional key point coordinate set corresponding to the training sample; determine, through an initial second branch network in the second initial network model according to the feature representation of the training sample, a predicted three-dimensional key point coordinate set corresponding to the training sample;
calculate a predicted head pose through a computing network in the second initial network model according to the predicted two-dimensional key point coordinate set and the predicted three-dimensional key point coordinate set;
calculate a first loss value according to the predicted two-dimensional key point coordinate set and the real two-dimensional key point coordinate set in the training samples, calculate a second loss value according to the predicted three-dimensional key point coordinate set and the real three-dimensional key point coordinate set in the training samples; and calculate a third loss value according to the predicted head pose and a real head pose in the training sample; and
adjust the second initial network model according to the first loss value, the second loss value, and the third loss value, to obtain the first network model.

An embodiment of this application provides a head pose estimation apparatus. The apparatus obtains the first branch network and the second branch network through training in the training process, respectively outputs the 2D key point coordinates and the 3D key point coordinates of the target face image in the to-be-recognized image through the two branch networks, and then calculates the head pose of the target face image based on the 2D key point coordinates and the 3D key point coordinates. Since the 3D key point coordinate may be obtained in real time, a 3D head model may change with changes in expressions. Correspondingly, the correspondence between the 2D key point coordinate and the 3D key point coordinate is more accurate, so that when a person makes a large expression, it is ensured that head pose solution is stable and reliable. At the same time, the first branch network and the second branch network are jointly trained, thereby increasing the learning performance of the model.

In an embodiment, based on the embodiment corresponding to FIG. 9, in another embodiment of the head pose estimation apparatus 20 provided by this embodiment of this application, the training module 204 is specifically configured to:
determine, through the initial first branch network according to the feature representation of the training sample, a predicted two-dimensional key point coordinate set corresponding to the training samples and a predicted uncertainty degree corresponding to each predicted key point coordinate in the predicted two-dimensional key point coordinate set; and
calculate the first loss value according to the predicted two-dimensional key point coordinate set, the predicted uncertainty degree, and the real two-dimensional key point coordinate set.

In an embodiment, based on the embodiment corresponding to FIG. 9, in another embodiment of the head pose estimation apparatus 20 provided by this embodiment of this application, the feature extraction network includes a residual neural network ResNet and a pooling layer, the first branch network is a fully connected layer, and the second branch network is a fully connected layer. The computing network is a differentiable PnP solution network.

An embodiment of this application provides a head pose estimation apparatus. The apparatus can increase the feasibility of the solution.

In an embodiment, based on the embodiment corresponding to FIG. 8, in another embodiment of the head pose estimation apparatus 20 provided by this embodiment of this application, the obtaining module 201 is specifically configured to obtain a to-be-processed image, where the to-be-processed image includes a target face image captured by a camera;
determine sparse key points of the target face image in the to-be-processed image through an image preprocessing network, where the sparse key points include facial feature points and face contour points of the target face image;
obtain the target face image from the to-be-processed image according to the face contour points; and
horizontally align the target face image and scale the target face image to a target size according to the facial feature points to obtain the to-be-recognized image.

An embodiment of this application provides a head pose estimation apparatus. The apparatus performs matting and alignment on the face image through sparse key points, which can reduce the interference caused by background information in the image collected by the camera. The image is scaled to a uniform size, to facilitate feature extraction of the image.

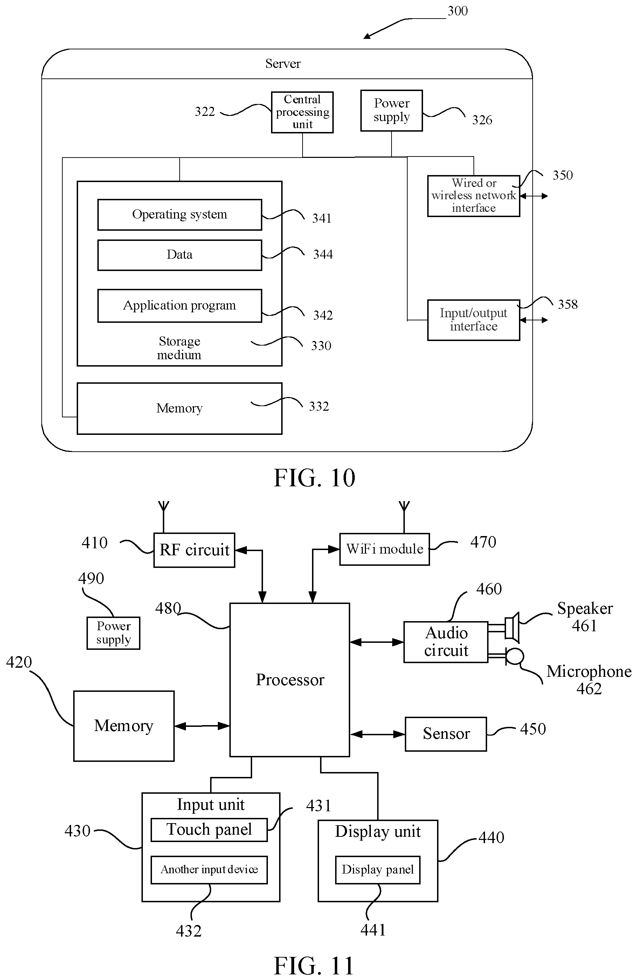

The head pose estimation apparatus provided in this application may be applied to a server. FIG. 10 is a schematic structural diagram of a server according to an embodiment of this application. The server 300 may greatly differ as configuration or performance differs, may include one or more central processing units (CPU) 322 (for example, one or more processors), a memory 332, and one or more storage mediums 330 storing an application program 342 or data 344 (for example, one or more mass storage devices). The memory 332 and the storage medium 330 may be used for transient storage or permanent storage. A program stored in the storage medium 330 may include one or more modules (which are not marked in the figure), and each module may include a series of instruction operations on the server. Further, the central processing unit 322 may be set to communicate with the storage medium 330, and execute, on the server 300, a series of instructions and operations in the storage medium 330.

The server 300 may further include one or more power supplies 326, one or more wired or wireless network interfaces 350, one or more input/output interfaces 358, and/or one or more operating systems 341 such as Windows Server^{™}, Mac OS X^{™}, Unix^{™}, Linux^{™}, and FreeBSD^{™}.

The operations performed by the server in the foregoing embodiment may be based on the server structure shown in FIG. 10.

The head pose estimation apparatus provided in this application may be applied to a terminal device. Referring to FIG. 11, for ease of description, only the parts related to the embodiments of this application are shown. For specific technical details not disclosed, refer to the method of the embodiments of this application. In the embodiments of this application, an example in which the terminal device is a smartphone is used for description.

FIG. 11 is a block diagram of a structure of a part of a smartphone related to a terminal device according to an embodiment of this application. Referring to FIG. 11, the smartphone includes: components such as: a radio frequency (RF) circuit 410, a memory 420, an input unit 430, a display unit 440, a sensor 450, an audio circuit 460, a wireless fidelity (WiFi) module 470, a processor 480, and a power supply 490. A person skilled in the art may understand that the structure of the smartphone shown in FIG. 11 does not constitute a limitation on the smartphone, and the smartphone may include more components or fewer components than those shown in the figure, or some components may be combined, or a different component deployment may be used.

The following makes a specific description of components of the smartphone with reference to FIG. 11.

The RF circuit 410 may be configured to receive and send signals during an information receiving and sending process or a call process. Specifically, the RF circuit 410 receives downlink information from a base station, then delivers the downlink information to the processor 480 for processing, and sends related uplink data to the base station. Usually, the RF circuit 410 includes, but is not limited to, an antenna, at least one amplifier, a transceiver, a coupler, a low noise amplifier (LNA), and a duplexer. In addition, the RF circuit 410 may also communicate with a network and another device by means of wireless communication. The wireless communication may use any communications standard or protocol, which includes, but is not limited to, Global System for Mobile communications (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The memory 420 may be configured to store a software program and module. The processor 480 runs the software program and module stored in the memory 420, to implement various functional applications and data processing of the smartphone. The memory 420 may mainly include a program storage area and a data storage area. The program storage area may store an operating system, an application program required by at least one function (for example, a sound playing function and an image playing function), or the like. The data storage area may store data (for example, audio data and a phone book) created according to use of the smartphone. In addition, the memory 420 may include a high speed random access memory, and may also include a non-volatile memory, such as at least one magnetic disk storage device, a flash memory, or another volatile solid-state storage device.

The input unit 430 may be configured to receive input digit or character information, and generate a keyboard signal input related to the user setting and function control of the smartphone. Specifically, the input unit 430 may include a touch panel 431 and another input device 432. The touch panel 431, which may also be referred to as a touch screen, may collect a touch operation of a user on or near the touch panel (such as an operation of a user on or near the touch panel 431 by using any suitable object or accessory such as a finger or a stylus), and drive a corresponding connection apparatus according to a preset program. In an embodiment, the touch panel 431 may include two parts: a touch detection apparatus and a touch controller. The touch detection apparatus detects a touch location of the user, detects a signal carried by a touch operation, and transmits the signal to the touch controller. The touch controller receives touch information from the touch detection apparatus, converts the touch information to touch point coordinates, sends the touch point coordinates to the processor 480, and receives and executes a command from the processor 480. In addition, the touch panel 431 may be implemented by using various types, such as a resistive type, a capacitance type, an infrared type, and a surface sound wave type. In addition to the touch panel 431, the input unit 430 may further include the another input device 432. Specifically, the another input device 432 may include, but is not limited to, one or more of a physical keyboard, a functional key (such as a volume control key or a switch key), a track ball, a mouse, and a joystick.

The display unit 440 may be configured to display information input by the user or information provided for the user, and various menus of the smartphone. The display unit 440 may include a display panel 441. In an embodiment, the display panel 441 may be configured by using a liquid crystal display (LCD), an organic light-emitting diode (OLED), or the like. Further, the touch panel 431 may cover the display panel 441. After detecting a touch operation on or near the touch panel, the touch panel 431 transfers the touch operation to the processor 480, to determine a type of a touch event. Then, the processor 480 provides a corresponding visual output on the display panel 441 according to the type of the touch event. Although in FIG. 11, the touch panel 431 and the display panel 441 are used as two separate parts to implement input and output functions of the smartphone, in some embodiments, the touch panel 431 and the display panel 441 may be integrated to implement the input and output functions of the smartphone.

The smartphone may further include at least one sensor 450 such as an optical sensor, a motion sensor, and other sensors. Specifically, the optical sensor may include an ambient light sensor and a proximity sensor, where the ambient light sensor may adjust luminance of the display panel 441 according to the luminance of the ambient light, and the proximity sensor may switch off the display panel 441 and/or backlight when the smartphone is moved to the ear. As one type of motion sensor, an acceleration sensor may detect magnitude of accelerations in various directions (generally on three axes), may detect magnitude and a direction of the gravity when static, and may be applied to an application that recognizes the pose of the smartphone (for example, switching between landscape orientation and portrait orientation, a related game, and magnetometer pose calibration), a function related to vibration recognition (such as a pedometer and a knock), and the like. Other sensors, such as a gyroscope, a barometer, a hygrometer, a thermometer, and an infrared sensor, which may be configured in the smartphone, are not further described herein.

The audio circuit 460, a speaker 461, and a microphone 462 may provide audio interfaces between the user and the smartphone. The audio circuit 460 may convert received audio data into an electric signal and transmit the electric signal to the loudspeaker 461. The loudspeaker 461 converts the electric signal into a sound signal and output the sound signal. In another aspect, the microphone 462 converts a collected sound signal into an electric signal. The audio circuit 460 receives the electric signal, converts the electric signal into audio data, and outputs the audio data to the processor 480 for processing. Then, the processor sends the audio data to another smartphone by using the RF circuit 410, or outputs the audio data to the memory 420 for further processing.

Wi-Fi belongs to a short distance wireless transmission technology. The smartphone may help, by using the Wi-Fi module 470, a user to receive and send an email, browse a web page, access stream media, and the like. This provides wireless broadband Internet access for the user. Although FIG. 11 shows the Wi-Fi module 470, the Wi-Fi module is not a necessary component of the smartphone, and may be omitted as required provided that the scope of the essence of the present disclosure is not changed.

The processor 480 is a control center of the smartphone, and is connected to various parts of the entire smartphone by using various interfaces and lines. By running or executing a software program and/or module stored in the memory 420, and invoking data stored in the memory 420, the processor executes various functions of the smartphone and performs data processing, thereby monitoring the entire smartphone. In an embodiment, the processor 480 may include one or more processing units. In an embodiment, the processor 480 may integrate an application processor and a modem. The application processor mainly processes an operating system, a user interface, an application program, and the like. The modem mainly processes wireless communication. The foregoing modem may either not be integrated into the processor 480.

The smartphone further includes the power supply 490 (such as a battery) for supplying power to the components. In an embodiment, the power supply may be logically connected to the processor 480 by using a power management system, thereby implementing functions such as charging, discharging and power consumption management by using the power management system.

Although not shown in the figure, the smartphone may further include a camera, a Bluetooth module, and the like, which are not further described herein.

Operations performed by the terminal device in the foregoing embodiment may be based on a structure of the terminal device that is shown in FIG. 11.

An embodiment of this application further provides a computer-readable storage medium. The computer-readable storage medium stores a computer program. When the computer program runs on a computer, the computer is caused to perform the methods according to the foregoing embodiments.

An embodiment of this application further provides a computer program product including a program, and when the program runs on a computer, the computer is caused to perform the methods according to the foregoing embodiments.

A person skilled in the art can clearly understand that for convenience and conciseness of description, for specific working processes of the foregoing systems, devices and units, refer to the corresponding processes in the foregoing method embodiments, and details are not described herein again.

In the several embodiments provided in this application, the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or some of the technical solutions may be implemented in the form of a software product. The computer software product is stored in a storage medium and includes several instructions for instructing a computer device (which may be a personal computer, a server, a network device, or the like) to perform all or some of the operations of the methods described in the embodiments of this application. The foregoing storage medium includes any medium that may store program code, such as a USB flash drive, a removable hard disk, a read-only memory (ROM), a random access memory (RAM), a magnetic disk, or an optical disc.

The foregoing embodiments are merely used for describing the technical solutions of this application, but are not intended to limit this application. Although this application is described in detail with reference to the foregoing embodiments, it should be appreciated by a person skilled in the art that, modifications may still be made to the technical solutions described in the foregoing embodiments, or equivalent replacements may be made to the part of the technical features.

## Claims

1. A head pose estimation method performed by a computer device, comprising:
obtaining an input image comprising a target face;
performing key point recognition processing on the input image through a first network model, to obtain a two-dimensional key point coordinate set and a three-dimensional key point coordinate set of the target face, the first network model comprising a first branch network configured to recognize the two-dimensional key point coordinate set and a second branch network configured to recognize the three-dimensional key point coordinate set; and
determining, according to the two-dimensional key point coordinate set and the three-dimensional key point coordinate set, a head pose in the target face in the input image, **characterized in that** the performing key point recognition processing on the input image through a first network model, to obtain a two-dimensional key point coordinate set and a three-dimensional key point coordinate set of the target face comprises:
performing key point recognition processing on the input image through the first network model, to obtain the two-dimensional key point coordinate set, an uncertainty degree corresponding to each two-dimensional key point coordinate in the two-dimensional key point coordinate set, and the three-dimensional key point coordinate set; wherein the first branch network in the first network model is further configured to recognize the uncertainty degree corresponding to each two-dimensional key point coordinate in the two-dimensional key point coordinate set; and
the determining, according to the two-dimensional key point coordinate set and the three-dimensional key point coordinate set, the head pose in the target face in the input image comprises:
determining, according to the two-dimensional key point coordinate set, the uncertainty degree, and the three-dimensional key point coordinate set, the head pose in the target face in the input image, wherein the determining, according to the two-dimensional key point coordinate set, the uncertainty degree, and the three-dimensional key point coordinate set, the head pose in the target face in the input image comprises:
eliminating, from the two-dimensional key point coordinate set, a two-dimensional key point coordinate whose corresponding uncertainty degree is greater than a preset threshold, to obtain an intermediate two-dimensional key point coordinate set;
obtaining an intermediate three-dimensional key point coordinate set from the three-dimensional key point coordinate set according to the intermediate two-dimensional key point coordinate set; and
determining, according to the intermediate two-dimensional key point coordinate set and the intermediate three-dimensional key point coordinate set, the head pose in the target face in the input image.

2. The method according to claim 1, wherein the determining, according to the intermediate two-dimensional key point coordinate set and the intermediate three-dimensional key point coordinate set, the head pose in the target face in the input image comprises:
determining, through PnP solution according to the intermediate two-dimensional key point coordinate set and the intermediate three-dimensional key point coordinate set, the head pose in the target face in the input image.

3. The method according to any one of claims 1 to 2, wherein the method further comprises:
obtaining a first training sample set, wherein the first training sample set comprises training samples that are annotated with a real two-dimensional key point coordinate set and a real three-dimensional key point coordinate set of a face image;
performing, through a feature extraction network layer in a first initial network model to be trained, feature extraction processing on a face image corresponding to a training sample in the first training sample set, to obtain a feature representation of the training sample;
determining, through an initial first branch network in the first initial network model according to the feature representation of the training sample, a predicted two-dimensional key point coordinate set corresponding to the training sample; and determining, through an initial second branch network in the first initial network model according to the feature representation of the training sample, a predicted three-dimensional key point coordinate set corresponding to the training sample;
calculating a first loss value according to the predicted two-dimensional key point coordinate set and the real two-dimensional key point coordinate set in the training samples, and calculating a second loss value according to the predicted three-dimensional key point coordinate set and the real three-dimensional key point coordinate set in the training samples;
adjusting the initial first branch network according to the first loss value to obtain the first branch network, and adjusting the initial second branch network according to the second loss value to obtain the second branch network; and
obtaining the first network model according to the first branch network and the second branch network.

4. The method according to claim 3, wherein the determining, through the initial first branch network in the first initial network model according to the feature representation of the training sample, the predicted two-dimensional key point coordinate set corresponding to the training sample comprises:
determining, through the initial first branch network according to the feature representation of the training sample, a predicted two-dimensional key point coordinate set corresponding to the training samples and a predicted uncertainty degree corresponding to each predicted key point coordinate in the predicted two-dimensional key point coordinate set; and
the calculating the first loss value according to the predicted two-dimensional key point coordinate set and the real two-dimensional key point coordinate set in the training samples comprises:
calculating the first loss value according to the predicted two-dimensional key point coordinate set, the predicted uncertainty degree, and the real two-dimensional key point coordinate set.

5. The method according to claim 3 or 4, wherein the obtaining the first training sample set comprises:
collecting a training image set through a depth camera, wherein each training image in the training image set comprises three-dimensional point cloud data and a real head pose of a face image;
performing pose projection on the three-dimensional point cloud data to obtain two-dimensional key point data of the face image in the training image; and
determining the first training sample set through an image processing network according to the training image set.

6. The method according to claim 5, wherein the determining the first training sample set through the image processing network according to the training image set comprises:
determining sparse key points of the face image in the training image through the image processing network according to the training image in the training image set, wherein the sparse key points comprise facial feature points and face contour points of the face image;
obtaining the face image from the training image according to the face contour points; and
horizontally aligning the face image and scaling the face image to a target size according to the facial feature points, to obtain training samples in the first training sample set.

7. The method according to any one of claims 3 to 6, wherein the feature extraction network comprises a residual neural network, ResNet, and a pooling layer, the first branch network is a fully connected layer, and the second branch network is a fully connected layer.

8. The method according to any one of claims 1 to 2, wherein the method further comprises:
obtaining a second training sample set, wherein the second training sample set comprises training samples that are annotated with a real two-dimensional key point coordinate set, a real three-dimensional key point coordinate set, and a real head pose of a face image;
performing, through a feature extraction network layer in a second initial network model to be trained, feature extraction processing on a face image corresponding to a training sample in the second training sample set, to obtain a feature representation of the training sample;
determining, through an initial first branch network in the second initial network model according to the feature representation of the training sample, a predicted two-dimensional key point coordinate set corresponding to the training sample; and determining, through an initial second branch network in the second initial network model according to the feature representation of the training sample, a predicted three-dimensional key point coordinate set corresponding to the training sample;
calculating a predicted head pose through a computing network in the second initial network model according to the predicted two-dimensional key point coordinate set and the predicted three-dimensional key point coordinate set;
calculating a first loss value according to the predicted two-dimensional key point coordinate set and the real two-dimensional key point coordinate set in the training samples, calculating a second loss value according to the predicted three-dimensional key point coordinate set and the real three-dimensional key point coordinate set in the training samples; and calculating a third loss value according to the predicted head pose and a real head pose in the training sample; and
adjusting the second initial network model according to the first loss value, the second loss value, and the third loss value, to obtain the first network model.

9. The method according to claim 8, wherein the determining, through the initial first branch network in the second initial network model according to the feature representation of the training sample, the predicted two-dimensional key point coordinate set corresponding to the training sample comprises:
determining, through the initial first branch network according to the feature representation of the training sample, a predicted two-dimensional key point coordinate set corresponding to the training samples and a predicted uncertainty degree corresponding to each predicted key point coordinate in the predicted two-dimensional key point coordinate set; and
the calculating the first loss value according to the predicted two-dimensional key point coordinate set and the real two-dimensional key point coordinate set in the training samples comprises:
calculating the first loss value according to the predicted two-dimensional key point coordinate set, the predicted uncertainty degree, and the real two-dimensional key point coordinate set.

10. The method according to claim 8 or 9, wherein the feature extraction network comprises a residual neural network, ResNet, and a pooling layer, the first branch network is a fully connected layer, and the second branch network is a fully connected layer; and the computing network is a differentiable PnP solution network.

11. The method according to any one of claims 1 to 10, wherein the obtaining the input image comprises:
obtaining a to-be-processed image, wherein the to-be-processed image comprises a target face captured by a camera;
determining sparse key points of the target face in the to-be-processed image through an image preprocessing network, wherein the sparse key points comprise facial feature points and face contour points of the target face;
obtaining the target face from the to-be-processed image according to the face contour points; and
horizontally aligning the target face and scaling the target face to a target size according to the facial feature points, to obtain the input image.

12. A computer device, comprising: a memory, a processor, and a bus system,
wherein the memory is configured to store a program; and
the processor is configured to execute the program in the memory, and to perform the method according to any one of claims 1 to 11 based on instructions in program code; and
the bus system is configured to connect the memory and the processor, causing the memory to communicate with the processor.

13. A computer-readable storage medium, comprising instructions, when being run on a computer, the instructions cause the computer to perform the method according to any one of claims 1 to 11.

## Patentansprüche

1. Verfahren zur Schätzung einer Kopfpose, das von einer Computervorrichtung durchgeführt wird, umfassend:
Erhalten eines Eingabebildes, das ein Zielgesicht umfasst;
Durchführen einer Schlüsselpunkt-Erkennungsverarbeitung an dem Eingabebild mittels eines ersten Netzwerkmodells, um einen zweidimensionalen Schlüsselpunkt-Koordinatensatz und einen dreidimensionalen Schlüsselpunkt-Koordinatensatz des Zielgesichts zu erhalten, wobei das erste Netzwerkmodell ein erstes Zweignetzwerk, das dazu konfiguriert ist, den zweidimensionalen Schlüsselpunkt-Koordinatensatz zu erkennen, und ein zweites Zweignetzwerk, das dazu konfiguriert ist, den dreidimensionalen Schlüsselpunkt-Koordinatensatz zu erkennen, umfasst; und
Bestimmen, gemäß dem zweidimensionalen Schlüsselpunkt-Koordinatensatz und dem dreidimensionalen Schlüsselpunkt-Koordinatensatz, einer Kopfpose in dem Zielgesicht in dem Eingabebild,
**dadurch gekennzeichnet, dass**
das Durchführen einer Schlüsselpunkt-Erkennungsverarbeitung an dem Eingabebild mittels eines ersten Netzwerkmodells, um einen zweidimensionalen Schlüsselpunkt-Koordinatensatz und einen dreidimensionalen Schlüsselpunkt-Koordinatensatz des Zielgesichts zu erhalten, umfasst:
Durchführen einer Schlüsselpunkt-Erkennungsverarbeitung an dem Eingabebild mittels des ersten Netzwerkmodells, um den zweidimensionalen Schlüsselpunkt-Koordinatensatz, einen Unsicherheitsgrad, der jeder zweidimensionalen Schlüsselpunkt-Koordinate in dem zweidimensionalen Schlüsselpunkt-Koordinatensatz entspricht, und den dreidimensionalen Schlüsselpunkt-Koordinatensatz zu erhalten; wobei das erste Zweignetzwerk in dem ersten Netzwerkmodell ferner dazu konfiguriert ist, den Unsicherheitsgrad zu erkennen, der jeder zweidimensionalen Schlüsselpunkt-Koordinate in dem zweidimensionalen Schlüsselpunkt-Koordinatensatz entspricht; und
das Bestimmen, gemäß dem zweidimensionalen Schlüsselpunkt-Koordinatensatz und dem dreidimensionalen Schlüsselpunkt-Koordinatensatz, der Kopfpose in dem Zielgesicht in dem Eingabebild umfasst:
Bestimmen, gemäß dem zweidimensionalen Schlüsselpunkt-Koordinatensatz, dem Unsicherheitsgrad und dem dreidimensionalen Schlüsselpunkt-Koordinatensatz, der Kopfpose in dem Zielgesicht in dem Eingabebild, wobei das Bestimmen, gemäß dem zweidimensionalen Schlüsselpunkt-Koordinatensatz, dem Unsicherheitsgrad und dem dreidimensionalen Schlüsselpunkt-Koordinatensatz, der Kopfpose in dem Zielgesicht in dem Eingabebild umfasst:
Eliminieren, aus dem zweidimensionalen Schlüsselpunkt-Koordinatensatz, einer zweidimensionalen Schlüsselpunkt-Koordinate, deren entsprechender Unsicherheitsgrad größer als ein vorgegebener Schwellenwert ist, um einen zweidimensionalen Zwischen-Schlüsselpunkt-Koordinatensatz zu erhalten;
Erhalten eines dreidimensionalen Zwischen-Schlüsselpunkt-Koordinatensatzes aus dem dreidimensionalen Schlüsselpunkt-Koordinatensatz gemäß dem zweidimensionalen Zwischen-Schlüsselpunkt-Koordinatensatz; und
Bestimmen, gemäß dem zweidimensionalen Zwischen-Schlüsselpunkt-Koordinatensatz und dem dreidimensionalen Zwischen-Schlüsselpunkt-Koordinatensatz, der Kopfpose in dem Zielgesicht in dem Eingabebild.

2. Verfahren nach Anspruch 1, wobei das Bestimmen, gemäß dem zweidimensionalen Zwischen-Schlüsselpunkt-Koordinatensatz und dem dreidimensionalen Zwischen-Schlüsselpunkt-Koordinatensatz, der Kopfpose in dem Zielgesicht in dem Eingabebild umfasst:
Bestimmen, mittels einer PnP-Lösung gemäß dem zweidimensionalen Zwischen-Schlüsselpunkt-Koordinatensatz und dem dreidimensionalen Zwischen-Schlüsselpunkt-Koordinatensatz, der Kopfpose in dem Zielgesicht in dem Eingabebild.

3. Verfahren nach einem der Ansprüche 1 bis 2, wobei das Verfahren ferner umfasst:
Erhalten eines ersten Trainingsprobensatzes, wobei der erste Trainingsprobensatz Trainingsproben umfasst, die mit einem realen zweidimensionalen Schlüsselpunkt-Koordinatensatz und einem realen dreidimensionalen Schlüsselpunkt-Koordinatensatz eines Gesichtsbildes annotiert sind;
Durchführen, mittels einer Merkmalsextraktions-Netzwerkschicht in einem ersten anfänglichen Netzwerkmodell, das trainiert werden soll, einer Merkmalsextraktionsverarbeitung an einem Gesichtsbild, das einer Trainingsprobe in dem ersten Trainingsprobensatz entspricht, um eine Merkmalsdarstellung der Trainingsprobe zu erhalten;
Bestimmen, mittels eines anfänglichen ersten Zweignetzwerks in dem ersten anfänglichen Netzwerkmodell gemäß der Merkmalsdarstellung der Trainingsprobe, eines vorhergesagten zweidimensionalen Schlüsselpunkt-Koordinatensatzes, der der Trainingsprobe entspricht; und Bestimmen, mittels eines anfänglichen zweiten Zweignetzwerks in dem ersten anfänglichen Netzwerkmodell gemäß der Merkmalsdarstellung der Trainingsprobe, eines vorhergesagten dreidimensionalen Schlüsselpunkt-Koordinatensatzes, der der Trainingsprobe entspricht;
Berechnen eines ersten Verlustwerts gemäß dem vorhergesagten zweidimensionalen Schlüsselpunkt-Koordinatensatz und dem realen zweidimensionalen Schlüsselpunkt-Koordinatensatz in den Trainingsproben, und Berechnen eines zweiten Verlustwerts gemäß dem vorhergesagten dreidimensionalen Schlüsselpunkt-Koordinatensatz und dem realen dreidimensionalen Schlüsselpunkt-Koordinatensatz in den Trainingsproben;
Anpassen des anfänglichen ersten Zweignetzwerks gemäß dem ersten Verlustwert, um das erste Zweignetzwerk zu erhalten, und Anpassen des anfänglichen zweiten Zweignetzwerks gemäß dem zweiten Verlustwert, um das zweite Zweignetzwerk zu erhalten; und
Erhalten des ersten Netzwerkmodells gemäß dem ersten Zweignetzwerk und dem zweiten Zweignetzwerk.

4. Verfahren nach Anspruch 3, wobei das Bestimmen, mittels des anfänglichen ersten Zweignetzwerks in dem ersten anfänglichen Netzwerkmodell gemäß der Merkmalsdarstellung der Trainingsprobe, des vorhergesagten zweidimensionalen Schlüsselpunkt-Koordinatensatzes, der der Trainingsprobe entspricht, umfasst:
Bestimmen, mittels des anfänglichen ersten Zweignetzwerks gemäß der Merkmalsdarstellung der Trainingsprobe, eines vorhergesagten zweidimensionalen Schlüsselpunkt-Koordinatensatzes, der den Trainingsproben entspricht, und eines vorhergesagten Unsicherheitsgrads, der jeder vorhergesagten Schlüsselpunkt-Koordinate in dem vorhergesagten zweidimensionalen Schlüsselpunkt-Koordinatensatz entspricht; und
das Berechnen des ersten Verlustwerts gemäß dem vorhergesagten zweidimensionalen Schlüsselpunkt-Koordinatensatz und dem realen zweidimensionalen Schlüsselpunkt-Koordinatensatz in den Trainingsproben umfasst:
Berechnen des ersten Verlustwerts gemäß dem vorhergesagten zweidimensionalen Schlüsselpunkt-Koordinatensatz, dem vorhergesagten Unsicherheitsgrad und dem realen zweidimensionalen Schlüsselpunkt-Koordinatensatz.

5. Verfahren nach Anspruch 3 oder 4, wobei das Erhalten des ersten Trainingsprobensatzes umfasst:
Erfassen eines Trainingsbildsatzes mittels einer Tiefenkamera, wobei jedes Trainingsbild in dem Trainingsbildsatz dreidimensionale Punktwolkendaten und eine reale Kopfpose eines Gesichtsbildes umfasst;
Durchführen einer Posenprojektion an den dreidimensionalen Punktwolkendaten, um zweidimensionale Schlüsselpunktdaten des Gesichtsbildes in dem Trainingsbild zu erhalten; und
Bestimmen des ersten Trainingsprobensatzes mittels eines Bildverarbeitungsnetzwerks gemäß dem Trainingsbildsatz.

6. Verfahren nach Anspruch 5, wobei das Bestimmen des ersten Trainingsprobensatzes mittels des Bildverarbeitungsnetzwerks gemäß dem Trainingsbildsatz umfasst:
Bestimmen spärlicher Schlüsselpunkte des Gesichtsbildes in dem Trainingsbild mittels des Bildverarbeitungsnetzwerks gemäß dem Trainingsbild in dem Trainingsbildsatz, wobei die spärlichen Schlüsselpunkte Gesichtsmerkmalpunkte und Gesichtskonturpunkte des Gesichtsbildes umfassen;
Erhalten des Gesichtsbildes aus dem Trainingsbild gemäß den Gesichtskonturpunkten; und
horizontales Ausrichten des Gesichtsbildes und Skalieren des Gesichtsbildes auf eine Zielgröße gemäß den Gesichtsmerkmalpunkten, um Trainingsproben in dem ersten Trainingsprobensatz zu erhalten.

7. Verfahren nach einem der Ansprüche 3 bis 6, wobei das Merkmalsextraktionsnetzwerk ein residuelles neuronales Netzwerk, ResNet, und eine Pooling-Schicht umfasst, das erste Zweignetzwerk eine vollständig verbundene Schicht ist und das zweite Zweignetzwerk eine vollständig verbundene Schicht ist.

8. Verfahren nach einem der Ansprüche 1 bis 2, wobei das Verfahren ferner umfasst:
Erhalten eines zweiten Trainingsprobensatzes, wobei der zweite Trainingsprobensatz Trainingsproben umfasst, die mit einem realen zweidimensionalen Schlüsselpunkt-Koordinatensatz, einem realen dreidimensionalen Schlüsselpunkt-Koordinatensatz und einer realen Kopfpose eines Gesichtsbildes annotiert sind;
Durchführen, mittels einer Merkmalsextraktions-Netzwerkschicht in einem zweiten anfänglichen Netzwerkmodell, das trainiert werden soll, einer Merkmalsextraktionsverarbeitung an einem Gesichtsbild, das einer Trainingsprobe in dem zweiten Trainingsprobensatz entspricht, um eine Merkmalsdarstellung der Trainingsprobe zu erhalten;
Bestimmen, mittels eines anfänglichen ersten Zweignetzwerks in dem zweiten anfänglichen Netzwerkmodell gemäß der Merkmalsdarstellung der Trainingsprobe, eines vorhergesagten zweidimensionalen Schlüsselpunkt-Koordinatensatzes, der der Trainingsprobe entspricht; und Bestimmen, mittels eines anfänglichen zweiten Zweignetzwerks in dem zweiten anfänglichen Netzwerkmodell gemäß der Merkmalsdarstellung der Trainingsprobe, eines vorhergesagten dreidimensionalen Schlüsselpunkt-Koordinatensatzes, der der Trainingsprobe entspricht;
Berechnen einer vorhergesagten Kopfpose mittels eines Berechnungsnetzwerks in dem zweiten anfänglichen Netzwerkmodell gemäß dem vorhergesagten zweidimensionalen Schlüsselpunkt-Koordinatensatz und dem vorhergesagten dreidimensionalen Schlüsselpunkt-Koordinatensatz;
Berechnen eines ersten Verlustwerts gemäß dem vorhergesagten zweidimensionalen Schlüsselpunkt-Koordinatensatz und dem realen zweidimensionalen Schlüsselpunkt-Koordinatensatz in den Trainingsproben, Berechnen eines zweiten Verlustwerts gemäß dem vorhergesagten dreidimensionalen Schlüsselpunkt-Koordinatensatz und dem realen dreidimensionalen Schlüsselpunkt-Koordinatensatz in den Trainingsproben; und Berechnen eines dritten Verlustwerts gemäß der vorhergesagten Kopfpose und einer realen Kopfpose in der Trainingsprobe; und
Anpassen des zweiten anfänglichen Netzwerkmodells gemäß dem ersten Verlustwert, dem zweiten Verlustwert und dem dritten Verlustwert, um das erste Netzwerkmodell zu erhalten.

9. Verfahren nach Anspruch 8, wobei das Bestimmen, mittels des anfänglichen ersten Zweignetzwerks in dem zweiten anfänglichen Netzwerkmodell gemäß der Merkmalsdarstellung der Trainingsprobe, des vorhergesagten zweidimensionalen Schlüsselpunkt-Koordinatensatzes, der der Trainingsprobe entspricht, umfasst:
Bestimmen, mittels des anfänglichen ersten Zweignetzwerks gemäß der Merkmalsdarstellung der Trainingsprobe, eines vorhergesagten zweidimensionalen Schlüsselpunkt-Koordinatensatzes, der den Trainingsproben entspricht, und eines vorhergesagten Unsicherheitsgrads, der jeder vorhergesagten Schlüsselpunkt-Koordinate in dem vorhergesagten zweidimensionalen Schlüsselpunkt-Koordinatensatz entspricht; und
das Berechnen des ersten Verlustwerts gemäß dem vorhergesagten zweidimensionalen Schlüsselpunkt-Koordinatensatz und dem realen zweidimensionalen Schlüsselpunkt-Koordinatensatz in den Trainingsproben umfasst:
Berechnen des ersten Verlustwerts gemäß dem vorhergesagten zweidimensionalen Schlüsselpunkt-Koordinatensatz, dem vorhergesagten Unsicherheitsgrad und dem realen zweidimensionalen Schlüsselpunkt-Koordinatensatz.

10. Verfahren nach Anspruch 8 oder 9, wobei das Merkmalsextraktionsnetzwerk ein residuelles neuronales Netzwerk, ResNet, und eine Pooling-Schicht umfasst, das erste Zweignetzwerk eine vollständig verbundene Schicht ist und das zweite Zweignetzwerk eine vollständig verbundene Schicht ist; und das Berechnungsnetzwerk ein differenzierbares PnP-Lösungsnetzwerk ist.

11. Verfahren nach einem der Ansprüche 1 bis 10, wobei das Erhalten des Eingabebildes umfasst:
Erhalten eines zu verarbeitenden Bildes, wobei das zu verarbeitende Bild ein Zielgesicht umfasst, das von einer Kamera erfasst wird;
Bestimmen spärlicher Schlüsselpunkte des Zielgesichts in dem zu verarbeitenden Bild mittels eines Bildvorverarbeitungsnetzwerks, wobei die spärlichen Schlüsselpunkte Gesichtsmerkmalpunkte und Gesichtskonturpunkte des Zielgesichts umfassen;
Erhalten des Zielgesichts aus dem zu verarbeitenden Bild gemäß den Gesichtskonturpunkten; und
horizontales Ausrichten des Zielgesichts und Skalieren des Zielgesichts auf eine Zielgröße gemäß den Gesichtsmerkmalpunkten, um das Eingabebild zu erhalten.

12. Computervorrichtung, umfassend: einen Speicher, einen Prozessor und ein Bussystem,
wobei der Speicher dazu konfiguriert ist, ein Programm zu speichern; und
der Prozessor dazu konfiguriert ist, das Programm in dem Speicher auszuführen und das Verfahren nach einem der Ansprüche 1 bis 11 auf der Grundlage von Anweisungen in einem Programmcode durchzuführen; und
das Bussystem dazu konfiguriert ist, den Speicher und den Prozessor zu verbinden, wodurch der Speicher veranlasst wird, mit dem Prozessor zu kommunizieren.

13. Computerlesbares Speichermedium, umfassend Anweisungen, die, wenn sie auf einem Computer ausgeführt werden, den Computer veranlassen, das Verfahren nach einem der Ansprüche 1 bis 11 durchzuführen.

## Revendications

1. Procédé d'estimation de la pose de la tête mis en œuvre par un dispositif informatique, comprenant :
obtenir une image d'entrée comprenant un visage cible ;
effectuer un traitement de reconnaissance de points clés sur l'image d'entrée au moyen d'un premier modèle de réseau, pour obtenir un ensemble de coordonnées de points clés bidimensionnels et un ensemble de coordonnées de points clés tridimensionnels du visage cible, le premier modèle de réseau comprenant un premier réseau de branche configuré pour reconnaître l'ensemble de coordonnées de points clés bidimensionnels et un second réseau de branche configuré pour reconnaître l'ensemble de coordonnées de points clés tridimensionnels ; et
déterminer, en fonction de l'ensemble de coordonnées de points clés bidimensionnels et de l'ensemble de coordonnées de points clés tridimensionnels, une pose de la tête dans le visage cible dans l'image d'entrée,
**caractérisé en ce que**
l'étape consistant à effectuer un traitement de reconnaissance de points clés sur l'image d'entrée au moyen d'un premier modèle de réseau, pour obtenir un ensemble de coordonnées de points clés bidimensionnels et un ensemble de coordonnées de points clés tridimensionnels du visage cible comprend :
effectuer un traitement de reconnaissance de points clés sur l'image d'entrée au moyen du premier modèle de réseau, pour obtenir l'ensemble de coordonnées de points clés bidimensionnels, un degré d'incertitude correspondant à chaque coordonnée de point clé bidimensionnel dans l'ensemble de coordonnées de points clés bidimensionnels, et l'ensemble de coordonnées de points clés tridimensionnels ; dans lequel le premier réseau de branche dans le premier modèle de réseau est en outre configuré pour reconnaître le degré d'incertitude correspondant à chaque coordonnée de point clé bidimensionnel dans l'ensemble de coordonnées de points clés bidimensionnels ; et
l'étape consistant à déterminer, en fonction de l'ensemble de coordonnées de points clés bidimensionnels et de l'ensemble de coordonnées de points clés tridimensionnels, la pose de la tête dans le visage cible dans l'image d'entrée comprend :
déterminer, en fonction de l'ensemble de coordonnées de points clés bidimensionnels, du degré d'incertitude et de l'ensemble de coordonnées de points clés tridimensionnels, la pose de la tête dans le visage cible dans l'image d'entrée, dans lequel l'étape consistant à déterminer, en fonction de l'ensemble de coordonnées de points clés bidimensionnels, du degré d'incertitude et de l'ensemble de coordonnées de points clés tridimensionnels, la pose de la tête dans le visage cible dans l'image d'entrée comprend :
éliminer, de l'ensemble de coordonnées de points clés bidimensionnels, une coordonnée de point clé bidimensionnel dont le degré d'incertitude correspondant est supérieur à un seuil prédéfini, pour obtenir un ensemble de coordonnées de points clés bidimensionnels intermédiaires ;
obtenir un ensemble de coordonnées de points clés tridimensionnels intermédiaires à partir de l'ensemble de coordonnées de points clés tridimensionnels en fonction de l'ensemble de coordonnées de points clés bidimensionnels intermédiaires ; et
déterminer, en fonction de l'ensemble de coordonnées de points clés bidimensionnels intermédiaires et de l'ensemble de coordonnées de points clés tridimensionnels intermédiaires, la pose de la tête dans le visage cible dans l'image d'entrée.

2. Procédé selon la revendication 1, dans lequel l'étape consistant à déterminer, en fonction de l'ensemble de coordonnées de points clés bidimensionnels intermédiaires et de l'ensemble de coordonnées de points clés tridimensionnels intermédiaires, la pose de la tête dans le visage cible dans l'image d'entrée comprend :
déterminer, au moyen d'une solution PnP en fonction de l'ensemble de coordonnées de points clés bidimensionnels intermédiaires et de l'ensemble de coordonnées de points clés tridimensionnels intermédiaires, la pose de la tête dans le visage cible dans l'image d'entrée.

3. Procédé selon l'une quelconque des revendications 1 à 2, dans lequel le procédé comprend en outre :
obtenir un premier ensemble d'échantillons d'apprentissage, dans lequel le premier ensemble d'échantillons d'apprentissage comprend des échantillons d'apprentissage qui sont annotés avec un ensemble réel de coordonnées de points clés bidimensionnels et un ensemble réel de coordonnées de points clés tridimensionnels d'une image de visage ;
effectuer, au moyen d'une couche de réseau d'extraction de caractéristiques dans un premier modèle de réseau initial à entraîner, un traitement d'extraction de caractéristiques sur une image de visage correspondant à un échantillon d'apprentissage dans le premier ensemble d'échantillons d'apprentissage, pour obtenir une représentation de caractéristiques de l'échantillon d'apprentissage ;
déterminer, au moyen d'un premier réseau de branche initial dans le premier modèle de réseau initial en fonction de la représentation de caractéristiques de l'échantillon d'apprentissage, un ensemble prédit de coordonnées de points clés bidimensionnels correspondant à l'échantillon d'apprentissage ; et déterminer, au moyen d'un second réseau de branche initial dans le premier modèle de réseau initial en fonction de la représentation de caractéristiques de l'échantillon d'apprentissage, un ensemble prédit de coordonnées de points clés tridimensionnels correspondant à l'échantillon d'apprentissage ;
calculer une première valeur de perte en fonction de l'ensemble prédit de coordonnées de points clés bidimensionnels et de l'ensemble réel de coordonnées de points clés bidimensionnels dans les échantillons d'apprentissage, et calculer une seconde valeur de perte en fonction de l'ensemble prédit de coordonnées de points clés tridimensionnels et de l'ensemble réel de coordonnées de points clés tridimensionnels dans les échantillons d'apprentissage ;
ajuster le premier réseau de branche initial en fonction de la première valeur de perte pour obtenir le premier réseau de branche, et ajuster le second réseau de branche initial en fonction de la seconde valeur de perte pour obtenir le second réseau de branche ; et
obtenir le premier modèle de réseau en fonction du premier réseau de branche et du second réseau de branche.

4. Procédé selon la revendication 3, dans lequel l'étape consistant à déterminer, au moyen du premier réseau de branche initial dans le premier modèle de réseau initial en fonction de la représentation de caractéristiques de l'échantillon d'apprentissage, l'ensemble prédit de coordonnées de points clés bidimensionnels correspondant à l'échantillon d'apprentissage comprend :
déterminer, au moyen du premier réseau de branche initial en fonction de la représentation de caractéristiques de l'échantillon d'apprentissage, un ensemble prédit de coordonnées de points clés bidimensionnels correspondant aux échantillons d'apprentissage et un degré d'incertitude prédit correspondant à chaque coordonnée de point clé prédite dans l'ensemble prédit de coordonnées de points clés bidimensionnels ; et
l'étape consistant à calculer la première valeur de perte en fonction de l'ensemble prédit de coordonnées de points clés bidimensionnels et de l'ensemble réel de coordonnées de points clés bidimensionnels dans les échantillons d'apprentissage comprend :
calculer la première valeur de perte en fonction de l'ensemble prédit de coordonnées de points clés bidimensionnels, du degré d'incertitude prédit et de l'ensemble réel de coordonnées de points clés bidimensionnels.

5. Procédé selon la revendication 3 ou 4, dans lequel l'étape consistant à obtenir le premier ensemble d'échantillons d'apprentissage comprend :
collecter un ensemble d'images d'apprentissage au moyen d'une caméra de profondeur, dans lequel chaque image d'apprentissage dans l'ensemble d'images d'apprentissage comprend des données de nuage de points tridimensionnel et une pose de la tête réelle d'une image de visage ;
effectuer une projection de pose sur les données de nuage de points tridimensionnel pour obtenir des données de points clés bidimensionnels de l'image de visage dans l'image d'apprentissage ; et
déterminer le premier ensemble d'échantillons d'apprentissage au moyen d'un réseau de traitement d'images en fonction de l'ensemble d'images d'apprentissage.

6. Procédé selon la revendication 5, dans lequel l'étape consistant à déterminer le premier ensemble d'échantillons d'apprentissage au moyen du réseau de traitement d'images en fonction de l'ensemble d'images d'apprentissage comprend :
déterminer des points clés épars de l'image de visage dans l'image d'apprentissage au moyen du réseau de traitement d'images en fonction de l'image d'apprentissage dans l'ensemble d'images d'apprentissage, dans lequel les points clés épars comprennent des points caractéristiques faciaux et des points de contour du visage de l'image de visage ;
obtenir l'image de visage à partir de l'image d'apprentissage en fonction des points de contour du visage ; et
aligner horizontalement l'image de visage et mettre à l'échelle l'image de visage à une taille cible en fonction des points caractéristiques faciaux, pour obtenir des échantillons d'apprentissage dans le premier ensemble d'échantillons d'apprentissage.

7. Procédé selon l'une quelconque des revendications 3 à 6, dans lequel le réseau d'extraction de caractéristiques comprend un réseau neuronal résiduel, ResNet, et une couche de regroupement, le premier réseau de branche est une couche entièrement connectée, et le second réseau de branche est une couche entièrement connectée.

8. Procédé selon l'une quelconque des revendications 1 à 2, dans lequel le procédé comprend en outre :
obtenir un second ensemble d'échantillons d'apprentissage, dans lequel le second ensemble d'échantillons d'apprentissage comprend des échantillons d'apprentissage qui sont annotés avec un ensemble réel de coordonnées de points clés bidimensionnels, un ensemble réel de coordonnées de points clés tridimensionnels et une pose de la tête réelle d'une image de visage ;
effectuer, au moyen d'une couche de réseau d'extraction de caractéristiques dans un second modèle de réseau initial à entraîner, un traitement d'extraction de caractéristiques sur une image de visage correspondant à un échantillon d'apprentissage dans le second ensemble d'échantillons d'apprentissage, pour obtenir une représentation de caractéristiques de l'échantillon d'apprentissage ;
déterminer, au moyen d'un premier réseau de branche initial dans le second modèle de réseau initial en fonction de la représentation de caractéristiques de l'échantillon d'apprentissage, un ensemble prédit de coordonnées de points clés bidimensionnels correspondant à l'échantillon d'apprentissage ; et déterminer, au moyen d'un second réseau de branche initial dans le second modèle de réseau initial en fonction de la représentation de caractéristiques de l'échantillon d'apprentissage, un ensemble prédit de coordonnées de points clés tridimensionnels correspondant à l'échantillon d'apprentissage ;
calculer une pose de la tête prédite au moyen d'un réseau de calcul dans le second modèle de réseau initial en fonction de l'ensemble prédit de coordonnées de points clés bidimensionnels et de l'ensemble prédit de coordonnées de points clés tridimensionnels ;
calculer une première valeur de perte en fonction de l'ensemble prédit de coordonnées de points clés bidimensionnels et de l'ensemble réel de coordonnées de points clés bidimensionnels dans les échantillons d'apprentissage, calculer une seconde valeur de perte en fonction de l'ensemble prédit de coordonnées de points clés tridimensionnels et de l'ensemble réel de coordonnées de points clés tridimensionnels dans les échantillons d'apprentissage ; et calculer une troisième valeur de perte en fonction de la pose de la tête prédite et d'une pose de la tête réelle dans l'échantillon d'apprentissage ; et
ajuster le second modèle de réseau initial en fonction de la première valeur de perte, de la seconde valeur de perte et de la troisième valeur de perte, pour obtenir le premier modèle de réseau.

9. Procédé selon la revendication 8, dans lequel l'étape consistant à déterminer, au moyen du premier réseau de branche initial dans le second modèle de réseau initial en fonction de la représentation de caractéristiques de l'échantillon d'apprentissage, l'ensemble prédit de coordonnées de points clés bidimensionnels correspondant à l'échantillon d'apprentissage comprend :
déterminer, au moyen du premier réseau de branche initial en fonction de la représentation de caractéristiques de l'échantillon d'apprentissage, un ensemble prédit de coordonnées de points clés bidimensionnels correspondant aux échantillons d'apprentissage et un degré d'incertitude prédit correspondant à chaque coordonnée de point clé prédite dans l'ensemble prédit de coordonnées de points clés bidimensionnels ; et
l'étape consistant à calculer la première valeur de perte en fonction de l'ensemble prédit de coordonnées de points clés bidimensionnels et de l'ensemble réel de coordonnées de points clés bidimensionnels dans les échantillons d'apprentissage comprend :
calculer la première valeur de perte en fonction de l'ensemble prédit de coordonnées de points clés bidimensionnels, du degré d'incertitude prédit et de l'ensemble réel de coordonnées de points clés bidimensionnels.

10. Procédé selon la revendication 8 ou 9, dans lequel le réseau d'extraction de caractéristiques comprend un réseau neuronal résiduel, ResNet, et une couche de regroupement, le premier réseau de branche est une couche entièrement connectée, et le second réseau de branche est une couche entièrement connectée ; et le réseau de calcul est un réseau de solution PnP différentiable.

11. Procédé selon l'une quelconque des revendications 1 à 10, dans lequel l'étape consistant à obtenir l'image d'entrée comprend :
obtenir une image à traiter, dans lequel l'image à traiter comprend un visage cible capturé par une caméra ;
déterminer des points clés épars du visage cible dans l'image à traiter au moyen d'un réseau de prétraitement d'images, dans lequel les points clés épars comprennent des points caractéristiques faciaux et des points de contour du visage du visage cible ;
obtenir le visage cible à partir de l'image à traiter en fonction des points de contour du visage ; et
aligner horizontalement le visage cible et mettre à l'échelle le visage cible à une taille cible en fonction des points caractéristiques faciaux, pour obtenir l'image d'entrée.

12. Dispositif informatique, comprenant : une mémoire, un processeur et un système de bus,
dans lequel la mémoire est configurée pour stocker un programme ; et
le processeur est configuré pour exécuter le programme dans la mémoire, et pour mettre en œuvre le procédé selon l'une quelconque des revendications 1 à 11 sur la base d'instructions dans un code de programme ; et
le système de bus est configuré pour connecter la mémoire et le processeur, amenant la mémoire à communiquer avec le processeur.

13. Support de stockage lisible par ordinateur, comprenant des instructions qui, lorsqu'elles sont exécutées sur un ordinateur, amènent l'ordinateur à mettre en œuvre le procédé selon l'une quelconque des revendications 1 à 11.
